# EUROPEAN PATENT APPLICATION

(11) **EP 4 550 164 A1**
(43) Date of publication of application: **07.05.2025**
(21) Application number: 23830456.2
(22) Date of filing: 29.06.2023
(51) Int. Cl.: G06F 16/21

(54) **MODEL CONSTRUCTION AND MODEL DATA SUBSCRIPTION METHOD AND APPARATUS, ELECTRONIC DEVICE AND MEDIUM**

(30) Priority: 30.06.2022 CN 202210767971; 30.06.2022 CN 202210768997
(71) Applicant: Beijing Wellintech Co., Ltd., Beijing 100086 (CN)
(72) Inventor: LIN, Wei, Beijing 100086 (CN)
(74) Representative: Cabinet Nony
(86) International application number: PCT/CN2023/104168
(87) International publication number: WO 2024/002292

(57) **Abstract**

The present application relates to the technical field of information processing, in particular to a model construction and model data subscription method and apparatus, an electronic device and a medium. The method comprises: for a target object and at least one sub-object contained in the target object, respectively constructing a first data model of the target object and a second data model of the at least one sub-object, wherein the data model at least has intrinsic properties which represent shared features of different types of objects, and the different types of objects comprise the target object or the sub-object; and establishing an association relationship between the second data model of the at least one sub-object and the first data model of the target object. Since the present application uses a consistent model structure to abstract real-world objects such as physical entities or events, and provides an effective and unified modeling method for twin objects, the modeling of various objects can be efficiently achieved.

## Description

### Cross-references to Related Applications

The present disclosure claims priority to Chinese patent application No. 202210767971.3, filed with China National Intellectual Property Administration on June 30, 2022, entitled "MODEL BUILDING AND MODEL DATA SUBSCRIPTION METHOD AND APPARATUS, ELECTRONIC DEVICE AND MEDIUM", the entire contents of which are incorporated herein by reference. The present disclosure claims priority to Chinese patent application No. 202210768997.X, filed with China National Intellectual Property Administration on June 30, 2022, entitled "MODEL BUILDING AND MODEL DATA SUBSCRIPTION METHOD AND APPARATUS, ELECTRONIC DEVICE AND MEDIUM ", the entire contents of which are incorporated herein by reference.

### Technical Field

The present disclosure relates to the field of information processing technology, and in particular to a model building and model data subscription method, apparatus, electronic device and medium.

### Background

With the rapid development of industrial Internet, digital twin function has been widely used in industrial Internet software development and design. The digital twin modeling method in related art is mostly applied in the digital field for modeling physical entities. For example, building a modeling platform based on the digital twin function for modeling physical entities.

However, traditional digital twin modeling platforms usually provide functions for modeling a certain physical entity or a certain scenario, such as digital twin modeling for rolling bearings, digital twin modeling for mines, digital twin modeling for physical networks, and so on. However, these platforms are mainly for a certain kind of specific things or scenarios, resulting in the fact that when oriented to different application scenarios, it is often necessary to re-build the corresponding digital twin model in order to realize the service for different application scenarios, and its universality, reusability, and compatibility are poor.

Therefore, how to provide a universal digital twin modeling method to improve the universality, reusability, and compatibility of the model is urgently needed.

Meanwhile, considering the physical entities and events in the objective world, which have different characteristics, the management for their life cycles is not suitable for a unified method. As a result, there is a lack of an effective and unified twin event modeling method.

### Summary

Embodiments of the present disclosure provide a model building and model data subscription method, apparatus, electronic device, and medium for improving the universality, reusability, and compatibility of a model, and, meanwhile, propose a twin event modeling method to efficiently implement the modeling of various types of events.

In a first aspect, the present disclosure provides a model building method, including: building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; and establishing an association relationship between the second data model of the at least one sub-object and the first data model of the target object.

Optionally, the target object is a target physical entity and the sub-object is a part entity; or the target object is a target event and the sub-object is a sub-event.

Optionally, the data model is further provided with a model identification, and the model identification is used to uniquely identify the data model.

Optionally, the association relationship includes that the second data model of the sub-object is a child model of the first data model of the target object; and the first data model of the target object is a unique parent model of the second data model of the sub-object.

Optionally, the data model further includes model version information; and the establishing an association relationship between the second data model of the at least one sub-object and the first data model of the target object further includes: establishing an association relationship between at least one version of the first data model of the target object and at least one version of the second data model of the sub-object.

Optionally, the data model further includes model version information; and the association relationship includes that one of versions of the second data model of the sub-object is a child model of one of versions of the first data model of the target object, and one of the versions of the data model of the target object is a unique parent model of one of the versions of the second data model of the sub-object.

Optionally, the data model includes a structural data model and a predefined data model, and one structural data model corresponds to at least one predefined data model; where the structural data model at least includes a description, including an attribute name and a data type, of an attribute; and the predefined data model is used to record a set of specific values of an attribute of the structural data model corresponding to the predefined data model.

Optionally, the data model further includes model version information; and the establishing an association relationship between the second data model of the at least one sub-object and the first data model of the target object further includes: establishing an association relationship between at least one version of a structural data model of the target object, and at least one version of a predefined data model of the sub-object; where the predefined data model is a child model of the structural data model, and the structural data model is a unique parent model of the predefined data model.

Optionally, the data model further includes model version information; and the establishing an association relationship between the second data model of the at least one sub-object and the first data model of the target object further includes: establishing an association relationship between at least one version of a predefined data model of the target object and at least one version of a predefined data model of the sub-object; where the predefined data model of the sub-object is a child model of the predefined data model of the target object; and the predefined data model of the target object is a unique parent model of the predefined data model of the sub-object.

Optionally, when the target object is a target physical entity, the inherent attribute includes a part or all of the following: a temporal attribute, and a spatial attribute; where the temporal attribute is used to characterize a frequency of change in state of an entity, the spatial attribute is used to characterize a space in which the entity is located, the spatial attribute at least includes a location and a shape, and the entity is the target physical entity or a part entity.

Optionally, when the target object is a target event, the inherent attribute includes a part or all of the following: a temporal attribute, and a spatial attribute; where the spatial attribute is used to characterize a space in which an event occurs, the temporal attribute at least includes a start time and further includes at least one of a time duration or an end time, and the event is the target event or a sub-event.

Optionally, the data model further includes a unique attribute; the unique attribute represents a unique feature of an object, and the object is the target object or the sub-object; where the unique attribute includes: a member collection including at least one custom member, and each custom member is used to map to one unique feature of the object.

In a second aspect, the present disclosure provides a model data query method, including: building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; establishing an association relationship between the second data model of the at least one sub-object and the first data model of the target object; receiving a subscription request for the first data model, where the subscription request includes subscription item information; identifying a model change feature of a change in model data of the first data model and/or the second data model, where the model change feature includes a model attribute and a model change event; and determining a subscription client based on the model change feature and at least one subscription request, publishing the model change event to the subscription client.

Optionally, the target object is a target physical entity and the sub-object is a part entity; or the target object is a target event and the sub-object is a sub-event.

Optionally, the model attribute includes a model identification, a name, a version, a temporal attribute, a spatial attribute, and a description.

Optionally, the model change event includes: a creation event, a deletion event, a version upgrade event, a structure change event, and an attribute change event.

Optionally, the subscription request includes an arbitrary combination in the model change event; or, the subscription request includes an arbitrary combination in the model attribute.

Optionally, the method further includes: obtaining a first model identification and an association relationship of a to-be-queried model, where the to-be-queried model is at least one of the first data model of the target object or the second data model of the sub-object; and querying model data of the to-be-queried model and model data of a model associated with the to-be-queried model based on the first model identification and the association relationship.

Optionally, the data model further includes model version information; where the obtaining a first model identification and an association relationship of a to-be-queried model further includes: obtaining model version information of the to-be-queried model; and the querying model data of the to-be-queried model based on the first model identification and the association relationship includes: building a query index based on the model version information and the first model identification, and querying model data of the to-be-queried model based on the query index.

Optionally, the querying model data of a model associated with the to-be-queried model based on the first model identification and the association relationship includes: obtaining a collection of sub-identifications corresponding to the to-be-queried model based on the association relationship, where the collection of sub-identifications includes a second model identification of at least one child model, a parent model of which is the to-be-queried model; and querying model data of child models respectively based on respective second model identifications in the collection of sub-identifications as the model data of the model associated with the to-be-queried model.

In a third aspect, the present disclosure provides a model building apparatus including: a model building unit, configured for building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; and a model association unit, configured for establishing an association relationship between the second data model of the at least one sub-object and the first data model of the target object.

In a fourth aspect, the present disclosure provides a model data subscription apparatus including: a model building unit, configured for building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; a model association unit, configured for establishing an association relationship between the second data model of the at least one sub-object and the first data model of the target object; and a data subscription unit, configured for receiving a subscription request for the first data model, where the subscription request includes subscription item information; identifying a model change feature of a change in model data of the first data model and/or the second data model, where the model change feature includes a model attribute and a model change event; and determining a subscription client based on the model change feature and at least one subscription request, publishing the model change event to the subscription client.

In a fifth aspect, embodiments of the present disclosure provide an electronic device including a processor and a memory, where the memory stores a computer program, the computer program is executed by the processor to cause the processor to perform the above model building method or model data subscription method.

In a sixth aspect, embodiments of the present disclosure provide a computer-readable storage medium including a computer program, where the computer program, when the computer program is run on an electronic device, is used to cause the electronic device to perform the above model building method or model data subscription method.

In a seventh aspect, embodiments of the present disclosure provide a computer program product, including a computer program stored in a computer-readable storage medium; when a processor of an electronic device reads the computer program from the computer-readable storage medium, the processor executes the computer program to cause the electronic device to perform the above model building method or model data subscription method.

The beneficial effects of the present disclosure are as follows.

Embodiments of the present disclosure provide a model building and model data subscription method, apparatus, electronic device, and medium. The present disclosure uses a model structure with consistency to abstract various types of objects in the objective world, including physical entities and events, which allows the user to build a digital twin model (i.e., a data model) of an arbitrary object (e.g., a thing, a scenario, a system, an event, etc.) in a unified platform. The built data model at least characterizes the common feature of different types of objects, and the data mode of the object with the associated relationship and the data mode of the sub-object contained therein are also associated. Based on this approach, when oriented to different application scenarios, there is no need to rebuild a digital twin model, and different application scenarios can be served, thus satisfying the need for the modeling method to have universality, reusability, and compatibility. The data model built based on this approach can effectively improve the universality, reusability, and compatibility of the model. Moreover, the present disclosure proposes an efficient and unified event modeling method, which not only meets the requirements of universality, reusability, and compatibility of the modeling method, but also allows the user to carry out full life cycle management of events occurring in the objective world on a unified platform.

In addition, the present disclosure not only realizes a unified modeling method with universality, but also realizes a model data subscription method. On the basis of the above built data model, the subscription request for the data model is received, and the model change feature of the model data which has changed is identified by combining subscription item information in the subscription request, then the subscription client can be determined on the basis of the model change feature and the subscription request, and the model change event is published to the subscription client. Since the first data model and the second data model in the present disclosure have the association relationship, based on the association relationship, the subscription client can subscribe to the model data of the first data model and the model data of the second data model only through the subscription request for the first data model, so as to ensure that the subscription client can obtain the model change event in real time when the model data change occurs, and update the changed data in a timely manner. Other features and advantages of the present disclosure will be set forth in the subsequent specification and, in part, will become apparent from the specification or be understood by implementing the present disclosure. The purposes and other advantages of the present disclosure may be realized and obtained by means of the structure specifically noted in the specification, the claims, and the accompanying drawings as written.

### Brief Description of Figures

FIG. 1 is an optional schematic diagram of an application scenario in embodiments of the present disclosure.
FIG. 2 is a schematic diagram of a flow of a model building method for a physical entity in embodiments of the present disclosure.
FIG. 3 is a schematic diagram of a data model for an arbitrary physical entity in a twin objective world in embodiments of the present disclosure.
FIG. 4 is a schematic diagram of a first editing interface in embodiments of the present disclosure.
FIG. 5 is a schematic diagram of a second editing interface in embodiments of the present disclosure.
FIG. 6A is a schematic diagram of a third editing interface in embodiments of the present disclosure.
FIG. 6B is a schematic diagram of a fourth editing interface in embodiments of the present disclosure.
FIG. 7 is a schematic diagram of a fifth editing interface in embodiments of the present disclosure.
FIG. 8 is a schematic diagram of a sixth editing interface in embodiments of the present disclosure.
FIG. 9 is a schematic diagram of a structural data model and a predefined data model in embodiments of the present disclosure.
FIG. 10 is a parent-child model structure in embodiments of the present disclosure.
FIG. 11 is a flowchart of an implementation of a model building method for a physical entity in embodiments of the present disclosure.
FIG. 12 is a schematic diagram of an optional interaction implementation timing flow in embodiments of the present disclosure.
FIG. 13 is a flowchart of a model building method for an event in embodiments of the present disclosure.
FIG. 14 is a schematic diagram of a data model for an arbitrary event in a twin objective world in embodiments of the present disclosure.
FIG. 15 is a schematic diagram of a seventh editing interface in embodiments of the present disclosure.
FIG. 16 is a schematic diagram of another structural data model and a predefined data model in embodiments of the present disclosure.
FIG. 17 is a flowchart of an implementation of a model building method for an event in embodiments of the present disclosure.
FIG. 18 is a schematic diagram of another optional interaction implementation timing flow in embodiments of the present disclosure.
FIG. 19 is a schematic diagram of a composition structure of a model building apparatus in embodiments of the present disclosure.
FIG. 20 is a schematic diagram of a composition structure of a model data subscription apparatus in embodiments of the present disclosure.

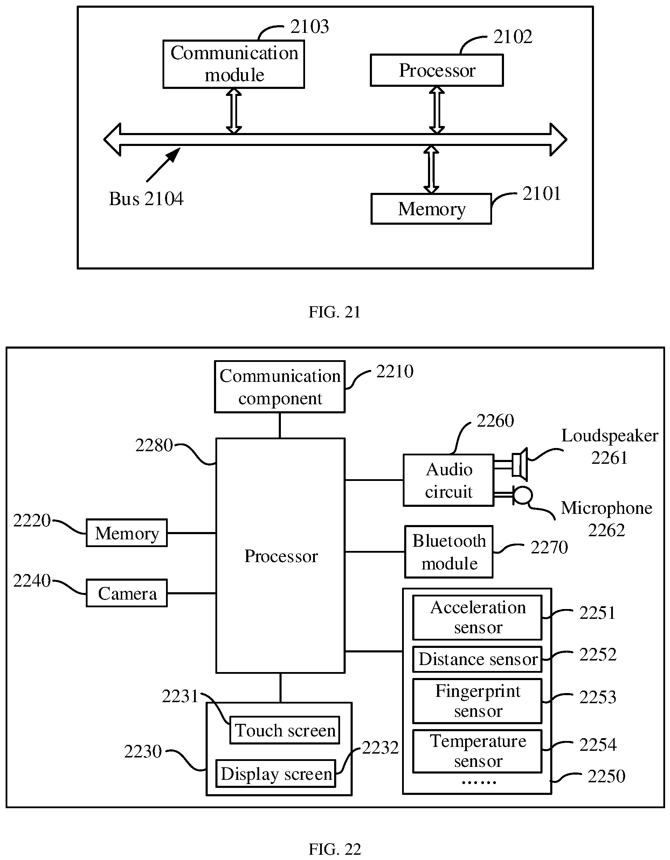

FIG. 21 is a schematic diagram of a hardware composition structure of an electronic device in embodiments of the present disclosure.
FIG. 22 is a schematic diagram of a hardware composition structure of yet another electronic device in embodiments of the present disclosure.

### Detailed Description

In order to make the purpose, technical solutions and advantages of the embodiments of the present disclosure clearer, the technical solutions of the present disclosure will be described clearly and completely in the following in conjunction with the accompanying drawings in the embodiments of the present disclosure, and it is obvious that the described embodiments are part of the embodiments of the technical solutions of the present disclosure and not all of the embodiments. Based on the embodiments documented in the present disclosure, all other embodiments obtained by a person of ordinary skill in the art without creative labor fall within the claimed scope of the technical solution of the present disclosure.

Some of the concepts involved in the embodiments of the present disclosure are described below.

Digital twin: refers to a product digital management method built using advanced modeling and simulation tools, covering a product life cycle and an entire value chain, and integrating and driving a unified model as a core of a product from all aspects of product design, manufacturing, and use and maintenance.

Entity: refers to a stuff, e.g., a thing, a product, a systems, etc., existing independently as the basis of all attributes and the origin of everything. According to the inclusion relationship, the entities herein are divided into two parts: physical entities and part entities contained in object entities. The physical entity can be a system, a thing, a product, a scenario, etc. The part entity refers to sub-portions contained in the physical entity, e.g., various module units contained in a system, parts contained in a thing, various sub-portions contained in a product, etc.

Event and sub-event: means a matter or item. In the objective world, anything may be accompanied by the generation of at least one event activity, i.e., event. For example, a thing of migratory bird may be accompanied by a migration event activity, a peach tree may be accompanied by event activities such as blossoming, fruiting, etc., a conference room may be accompanied by a meeting event activity, and a teaching building may be accompanied by event activities such as lectures and studies, etc. In addition, an event occurring may also contain multiple sub-events, for example, the learning event can be divided into Chinese class learning sub-event, math class learning sub-event, English class learning sub-event and so on.

Inherent attributes: means some attributes that are common and naturally exist between different objects, which can also be called natural attributes. When the object is a physical entity, in the objective world, a certain moment and a certain spatial location can be used to uniquely determine an entity and its state, and the entity state changes with time at a certain frequency, i.e., an arbitrary entity can naturally be described by using time and space; and when the object is an event, in the objective world, an arbitrary event activity occurring is composed of the space in which the event activity occurs as well as a start time and an end time of the event activity. That is, the arbitrary event can naturally be described using time and space. Therefore, spatial and temporal attributes are inherent attributes.

Unique attribute means an attribute that distinguishes an object from other objects, also known as a particular attribute. For example, when the object is a physical entity, the number of tires and composition structure of a car is different from that of an electric bike, and the shape and size of a car is different from that of a tree, which are all unique attributes. When the object is an event, for example, the learning event has a unique knowledge attribute, and the migration event has a unique route attribute, etc., all of these are unique attributes.

Data model: in which data are symbolic records that describe things. A model is an abstraction of the real world. A data model is an abstraction of data features, and in embodiments of the present disclosure, the data model is used to record data features of an object and of related sub-objects. For example, when the object is a physical entity, the data model is used to record data features of the physical entity and of related part entities, at least including inherent attribute data features, such as the space in which the entity is located; and may further include unique attribute data features of the entity. Moreover, when the object is an event, the data model is used to record data features of the event and of related sub-events, at least including inherent attribute data features, such as the space in which the event occurs; and may further include unique attribute data features of the event.

In addition, the data model in the present disclosure may be stored in a database. The data model in embodiments of the present disclosure includes a first data model and a second data model. Where "first" and "second" are used to differentiate the objects corresponding to the data models, the first data model is a model of a target object, and the second data model is a model of sub-objects included in the target object.

Preferred embodiments of the present disclosure are described below in connection with the accompanying drawings of the specification, and it should be understood that the preferred embodiments described herein are only for illustrating and explaining the present disclosure and are not intended to qualify the present disclosure, and that the embodiments and the features in the embodiments in the present disclosure may be combined with each other in the absence of conflict.

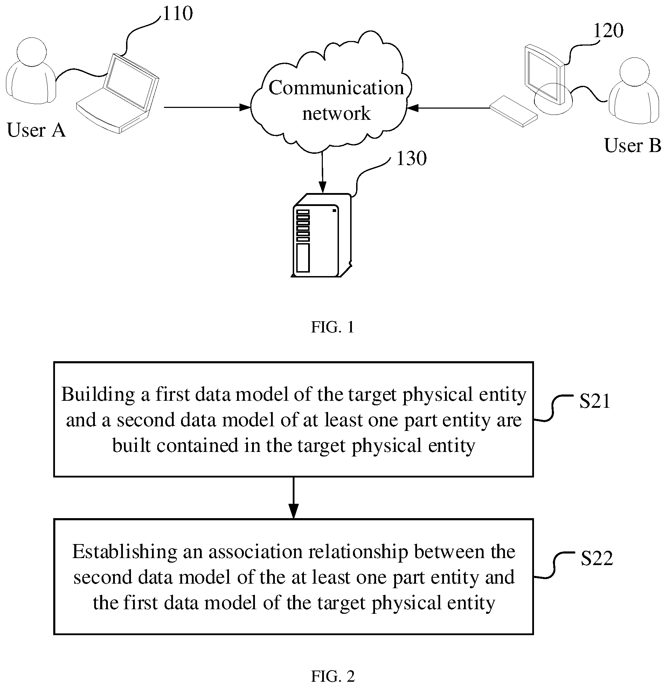

FIG. 1 is a schematic diagram of an application scenario in embodiments of the present disclosure. The diagram of the application scenario includes two terminal devices, which are a first terminal device 110 and a second terminal device 120, and a server 130.

In the embodiments of the present disclosure, the terminal device includes, but is not limited to, a cell phone, a tablet computer, a laptop computer, a desktop computer, an e-book reader, an intelligent voice interaction device, an intelligent home appliance, an in-vehicle terminal, and other device. The terminal device may be installed with a client related to model building and model subscription, and the client may be a software (e.g., a browser), a web page, a small program, and the like. For example, a model development client may be installed on the first terminal device 110, and the subscription client may be installed on the second terminal device 120. In addition, the model database is used to store a built data model and may be deployed in the terminal device (e.g., the first terminal device 110) or in the server 130.

In embodiments of the present disclosure, the server 130 may be an Independent physical server, or a server cluster or a distributed system composed of multiple physical servers, or may be a cloud server providing basic cloud computing services such as a cloud service, a cloud database, cloud computing, a cloud function, a cloud storage, a network service, a cloud communication, a middleware service, a domain name service, a security service, a content delivery network (CDN), and a big data and artificial intelligence platform, etc. The following is mainly based on the model database deployed in the server 130 as an example, and other situations are equally applicable to the present disclosure without specific limitation herein.

In the embodiments of the present disclosure, the user A may, through the model development client on the first terminal device 110, create a data model and edit a inherent attribute, a unique attribute, and the like contained in the data model through an editing interface, and then send a corresponding request to a server in which a model database is deployed (hereinafter referred to as sending a request to the model database). The model database receives the request sent by the model development client and stores the relevant model data.

Thereafter, the user B may, through the subscription client on the second terminal device 120, send a subscription request for the data model to the model development client (forwarded by the model development client) or the model database to obtain relevant subscription information and to query the model data of the data model, and the like.

In an optional implementation, the model development client, the subscription client, and the device in which the model database is deployed may communicate with each other over a communication network.

In an optional implementation, the communication network is a wired network or a wireless network.

It should be noted that the illustration shown in FIG. 1 is only an example, and in fact the number of terminal devices (model development client, subscription client) and the number of model databases are not limited, and are not specifically limited in the embodiments of the present disclosure.

The following is a description of a model building and model data subscription method provided by the exemplary embodiments of the present disclosure with reference to the accompanying drawings in conjunction with the above-described application scenarios, and it should be noted that the above-described application scenarios are shown only for the purpose of facilitating the understanding of the spirit and principles of the present disclosure, and the embodiments of the present disclosure are not limited in this regard in any way.

The present disclosure proposes a model building and model data subscription method, apparatus, electronic device, and medium, where a target object is a target physical entity and a sub-object is a part entity; or, the object is a target event and the sub-object is a sub-event.

In a first aspect, when the above object is determined to be the physical entity, in order to distinguish between the physical entity and the event, the physical entity is used in all the following descriptions.

Referring to FIG. 2, which is an implementation flowchart of a model building method for a physical entity provided by an embodiment of the present disclosure, a specific implementation flow of the method includes the following steps S21-S22.

S21: a first data model of the target physical entity and a second data model of at least one part entity are built, respectively, for the target physical entity and the at least one part entity contained in the target physical entity.

The data model in the embodiments of the present disclosure includes the first data model and the second data model, and the data model is at least provided with an inherent attribute and the inherent attribute denotes a common feature(s) among different types of entities. In the present disclosure, the different types of entities include different types of target physical entities or different types of part entities.

For a target physical entity, its inherent attribute is a common feature of different types of target physical entities. For a part entity, its inherent attribute is a common feature of different types of part entities. Because in the objective world, a certain moment and a certain spatial location can uniquely determine a thing and its state, and the state of the thing changes with time at a certain frequency, i.e., the arbitrary physical entity can naturally be described using time and space, where the time refers to the frequency of change of the thing, and the space refers to the location and shape of the physical entity. Thus, a physical entity can be abstracted as a natural attribute, i.e., an inherent attribute. Based on the above description, the inherent attribute can be further at least divided into a temporal attribute and a spatial attribute. Optionally, the inherent attribute includes, but is not limited to, a part or all of the following: a temporal attribute, and a spatial attribute. The temporal attribute is used to characterize a frequency of change in state of an entity; the spatial attribute is used to characterize a space in which an entity is located; and the spatial attribute at least includes a location and a shape.

In embodiments of the present disclosure, the entity is a target physical entity or a part entity. That is, a spatial attribute of the first data model represents a space in which the target physical entity is located, and a temporal attribute of the first data model is used to characterize a frequency of change in state of the target physical entity. A spatial attribute of the second data model represents a space in which the part entity is located, and the temporal attribute of the second data model is used to characterize a frequency of change in state of the part entity.

In addition, in embodiments of the present disclosure, the part entity is part of the target physical entity, and thus, the inherent attribute of the first data model and the inherent attribute of the second data model may be the same or different. For example, if a space of the target physical entity is an X building, a space of one of the part entities contained therein is also the X1 building; and for example, for the target physical entity (a car), the spatial attribute and the temporal attribute corresponding to one (wheel) of the part entities contained therein, and that corresponding to the car are the same. The different refers to that the inherent attribute of the second data model are more detailed than those of the first data model. For example, if the space of the target physical entity (a shopping mall) is an X1 building, the space of one (a store in that mall) of the part entities contained therein is an X2 room in the X1 building, and so on.

It should be noted that "entity" in the following is of the same meaning, and the repetition will not be repeated. In addition, considering that each physical entity is also provided with a particular attribute, also known as a unique attribute, that distinguish it from other physical entities, and for example, the number of tires, composition structure of a car is different from that of an electric bike, and so on. Thus, the data model may also include a unique attribute; the unique attribute represents a unique feature of the entity, which is the target physical entity or a part entity.

Optionally, the unique attribute includes, but is not limited to: a member collection including at least one custom member. Each custom member is used to map to one unique feature of the target physical entity.

In embodiments of the present disclosure, the custom member(s) may be represented as: a member list or collection, and the member list is used to map to an attribute unique to an arbitrary type of physical entities in the objective world, and each custom member at least includes a name attribute, a value attribute, and a value type attribute.

The name attribute is used to characterize a feature name of a unique feature, and for example, if one unique attribute of the target physical entity is temperature, the name can be recorded as "temperature". The value attribute is used to characterize a specific value of a feature value of the unique feature, and for example, if the temperature is 19°C, the value can be recorded as "19". The value type attribute is used to characterize a data type of the feature value, for example, the value type of temperature 19 is the integer, which can be calculated as "int", and if the number of bits is required to be limited to be up to 64, it can be expressed as "int64".

It should be noted that the above-listed inherent attribute including the temporal attribute, the spatial attribute is only an example, an arbitrary inherent attribute determined based on the common feature is applicable to the embodiments of the present disclosure, which is not limited herein. The unique attribute is also similar, and the repetitions will not be repeated.

Optionally, in addition to the inherent attribute and the unique attribute listed above, the data model is also provided with a model identification, and the model identification is used to uniquely identify the data model.

In embodiments of the present disclosure, the model identification may be denoted as GUID, for example, a model identification GUID of the target physical entity A is: guid1, and a model identification GUID of a part entity B contained therein is: guid1.1; and for example, a model identification GUID of the target physical entity C is: guid2, and a model identification GUID of a part entity D contained therein is: guid3, etc. The uniqueness of a physical entity can be characterized by the model identification.

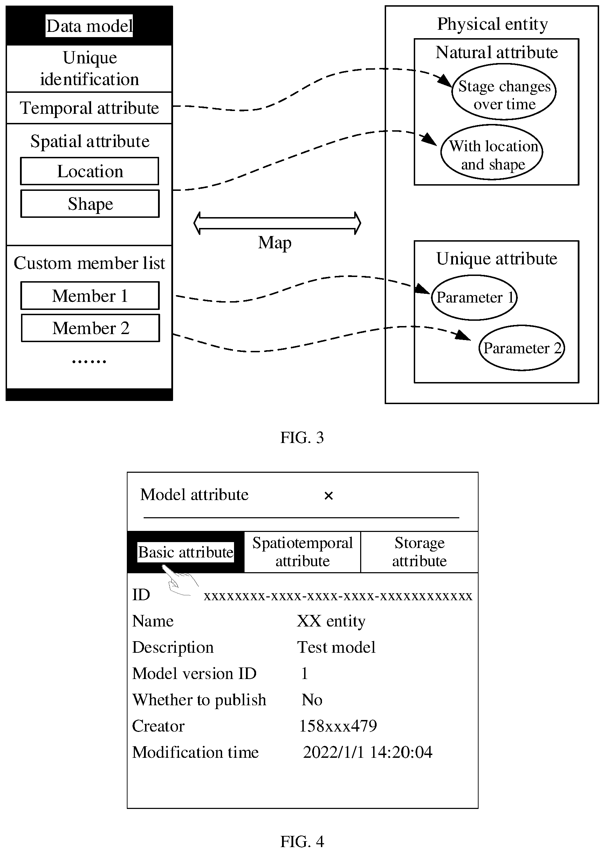

Referring to FIG. 3, which is a schematic diagram of a data model of an arbitrary physical entity in a twin objective world in embodiments of the present disclosure, the model includes the following portions: (1) a unique identification, which maps to the uniqueness of an arbitrary physical entity in the objective world; (2) a temporal attribute, which maps to a temporal attribute naturally possessed by an arbitrary physical entity in the objective world and characterizes that the state of the physical entity changes over time; (3) a spatial attribute, which maps to a spatial attribute naturally possessed by an arbitrary physical entity in the objective world, the spatial attribute at least including a location and a shape; and (4) a custom member(s), which is a member list, where the member list is used to map to an attribute unique to an arbitrary type of physical entities in the objective world, and each custom member at least contains a name attribute, a value attribute, and a value type attribute.

As shown in FIG. 3, each member may characterize one of the parameters of the unique attribute of the physical entity, e.g., a member 1 corresponds to a parameter 1, a member 2 corresponds to a parameter 2, etc.

It should be noted that both the first data model and the second data model in the embodiments of the present disclosure may be represented in the manner shown in FIG. 3. The following is a detailed description of the model building method in the embodiments of the present disclosure, mainly by taking the data model shown in FIG. 3 as an example. In the embodiments of the present disclosure, the process of model building may be implemented by a system at least including a model database and a model development client.

First, the user creates data models respectively for a certain type of physical entities and a certain type of corresponding part entities, and the process of creating the data model is as follows.

S1: the user, through the model development client, clicks to create a data model for the physical entity, and enters a model name and a description, etc.

The model name can be used to indicate the physical entity (e.g., the target physical entity, or the part entity contained in the target physical entity) characterized by the data model. For example, the target physical entity is "warehouse", a model name of which can be recorded as "warehouse", and for example, the target physical entity is "car", a model name of which can be recorded as "car". Of course, other naming methods can also be used to name the data model, which is not specifically limited herein. The description is a detailed introduction to the data model and the physical entity.

FIG. 4 is a schematic diagram of a first editing interface in embodiments of the present disclosure. In the embodiments of the present disclosure, the model attribute may further include, in addition to the temporal attribute and spatial attribute (referred to as spatiotemporal attribute) enumerated above, a basic attribute and a storage attribute.

The basic attribute at least includes, but is not limited to, a part or all of the following: a model identification (i.e., a unique identification GUID, which may also be referred to as an ID), a name, a version, and a description. In addition, it may further include whether to publish, a creator, a modification time, and the like.

As shown in FIG. 4, the basic attribute of the model is: a model ID (unique identification) as "xxxxxxxxxx-xxxx-xxxx-xxxxxx-xxxxxxxxxxxxx", where each x is a value in the range of 0-9 or a-f, the name is XX entity, the description is test model, the model version ID is 1, whether to publish is no, the creator is 158xxx479, and the modification time is 2022/1/1 14:20:04.

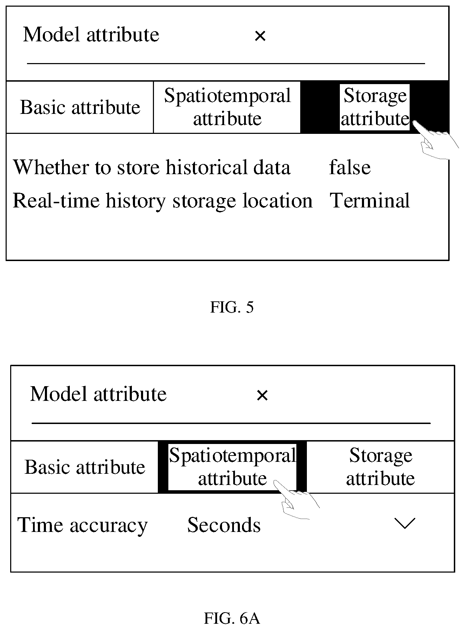

FIG. 5 is a schematic diagram of a second editing interface in embodiments of the present disclosure. In FIG. 5, the storage attribute of the model is: whether to store historical data: false (no), and a real-time history storage location: terminal.

S2: the model development client generates an initial data model structure based on a user input, and the data model inherently has the following attributes: a model name, a description, a unique identification, time accuracy, a geometry type, a coordinate system type, coordinates, a relative offset, a rotation angle, and a shape. The unique identification is a GUID to ensure that the model can still be ensured to be unique when being passed across multiple systems.

At S2, the spatiotemporal attribute including time accuracy, a geometry type, a coordinate system type, coordinates, a relative offset, a rotation angle, and a shape, etc., are illustrated as an example, which is not specifically limited herein.

S3: the user enters the model editing interface, and the editing interface displays the inherent attribute of the data model.

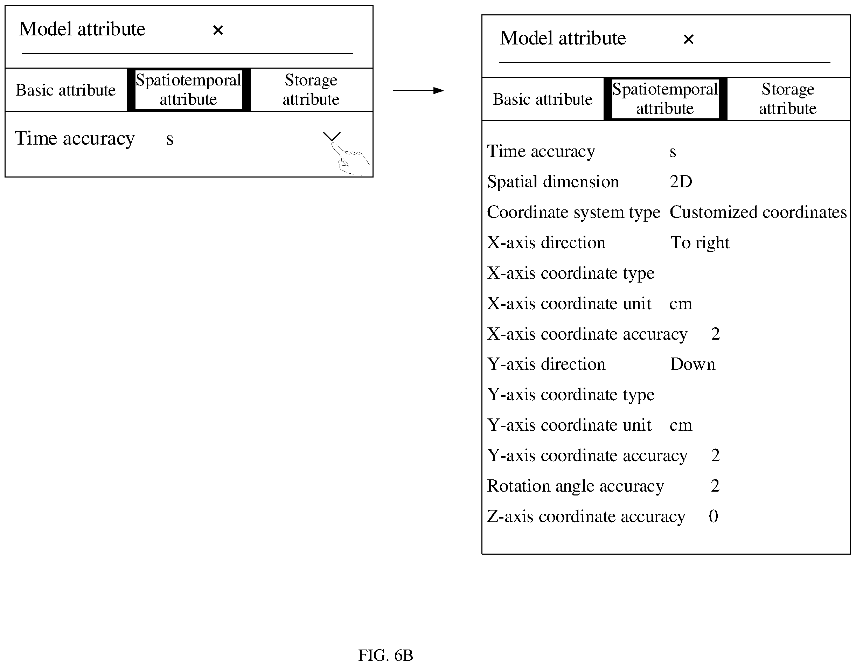

FIG. 6A is a schematic diagram of a third editing interface in embodiments of the present disclosure. The spatiotemporal attribute, i.e., time accuracy in seconds is displayed on the interface, and the user may click on a symbol to the right of "Time accuracy Second" to display more spatiotemporal attributes. FIG. 6B is a schematic diagram of a fourth editing interface in the embodiments of the present disclosure, where the user clicks on to display more temporal attributes, e.g., time accuracy in seconds (specific value is not set), a spatial dimension; time accuracy in seconds; and spatial dimension. set a specific value); a spatial dimension of 2D (i.e., two-dimension), a coordinate system type that is customized coordinates; an X-axis direction that is to the right, an X-axis coordinate type (not set), an X-axis coordinate unit that is centimeter, an X-axis coordinate accuracy that is 2, a Y-axis direction that is down, a Y-axis coordinate type (not set), a Y-axis coordinate unit that is centimeter, a Y-axis coordinate accuracy that is 2, a rotation angle accuracy that is 2, and a Z-axis coordinate accuracy that is 0, etc. By the above manner, the inherent attribute of the thing can be set according to the actual modeling needs, and in addition, the relevant information can be deleted, modified, etc. to realize the change of inherent attributes.

S4: since the inherent attribute only characterizes a common attribute of the objective thing, and different types of things have their own unique attributes, a function of customizing member is provided on the editing interface, so that the user can add the member to characterize the unique attribute of the thing based on the needs of the actual modeling.

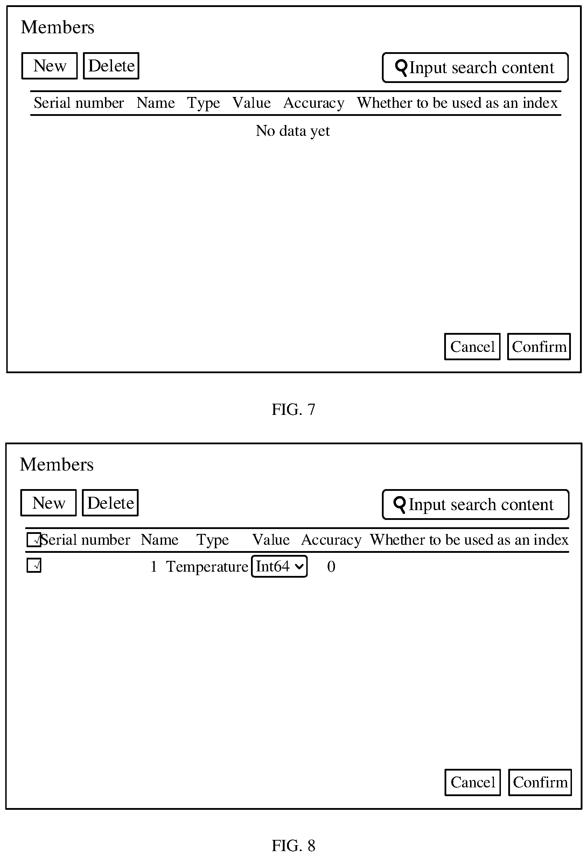

FIG. 7 is a schematic diagram of a fifth editing interface in the embodiments of the present disclosure. This interface is an initial unique attribute editing interface, where the user can add the member by clicking "new" to characterize the unique attributes of the thing, and information related to the member includes a serial number (a serial number of the member, for example, the serial number of the member 1 is 1), a name, a type, a value, accuracy, and whether to be used as an index, etc.

FIG. 8 is a schematic diagram of a sixth editing interface in the embodiments of the present disclosure. This interface indicates that the user has added a member a serial number of which is 1, a name of which is temperature, a type of which is Int64 (i.e., 64-bit integer data), and a value of which is 0, i.e., which indicates that the entity is provided with a unique attribute of temperature, and the specific value is 0. By the above manners, it is possible to add a member to characterize the unique attribute of the thing based on the needs of the actual modeling, in addition to deleting and modifying the member-related information, etc., to realize the change of the particular attribute.

S5: after the user finishes editing, the user sends a creation request to the model database, the request contains a session ID, a request ID, and user's editing information, and the editing information refers to member information added by the user, where the member information is a list of a set of user-defined parameters, and each parameter contains a name of the parameter and a data type of the parameter, which is manifested in the form of a string and an enumeration type.

S6: the model database, after receiving the request, parses the session ID and the request ID in the request for legitimacy verification, and then parses out the editing information in the request, and the database assigns a unique identification to the data model of the created physical entity, i.e., generates a GUID, generates a version number, and serializes the member list in the editing information into a binary stream, which is stored in the form of key-value. The key is the generated GUID, which is used as a unique index for querying. The database is internally partitioned to have a data model storage area of the physical entity, and all the data models of the physical entity are stored in this area. Since the inherent attribute of the data model of the physical entity is the attribute defined internally in the system, there is no need to additionally store the fixed attribute.

Based on the above manner, the first data model of the target physical entity, and the second data model of the part entity contained in the target physical entity may be created. It may also refer to the creation of a structural data model in the data model, which, in combination with the process of creating a predefined data model as enumerated below, can be composed into a model corresponding to the physical entity (or the part entity) including the structural data model and the predefined data model.

In embodiments of the present disclosure, the model is naturally provided with a unique identification, a temporal attribute, and a spatial attribute, and the spatial attribute at least contains a location and a shape, which do not need to be defined by the user. A custom member list is used to map to particular attributes of the different types of physical entities. A unified structure is used for storing and processing of the different models that are built.

S22: an association relationship is established between the second data model of the at least one part entity and the first data model of the target physical entity.

In embodiments of the present disclosure, considering that there is an association relationship between the part entity and the target physical entity, an association relationship may be established between the second data model and the first data model accordingly, facilitating the addition, deletion, modification, checking, subscription, and the like of the data. Optionally, the association relationship means that: the second data model of the part entity is a child model of the first data model of the target physical entity; and the first data model of the target physical entity is a unique parent model of the second data model of the part entity.

That is, the present disclosure proposes a parent-child model structure that can form a composite model including the first data model and at least one second data model. For example, if the target object entity is a car, and the first data model corresponding to it is a model A, and one of the part entities of the target physical entity is a wheel, and the second data model corresponding to it is a model B, then the model B belongs to a child model of the model A.

Optionally, the data model in the embodiments of the present disclosure further includes model version information (referred to as version). On this basis, an optional implementation of step S22 is to establish an association relationship between at least one version of the first data model of the target physical entity and at least one version of the second data model of the part entity.

Still taking the model listed above as an example, the model A has two versions, Va1 and Va2, and the model B has one version, Vb0, then in performing the step S22, an association relationship may be established only between the model B of the version Vb0 and the model A of the version Va1, or an association relationship may be established only between the model B of the version Vb0 and the model A of the version Va2, or an association relationship may be established between the model B of the version Vb0 and the model A of both the versions Va1 and Va2.

Optionally, in the case where the data model also includes model version information, the association relationship means that: the second data model of one of the versions of the part entity is a child model of the first data model of one of the versions of the target physical entity; and the first data model of one of the versions of the target physical entity is a unique parent model of the second data model of one of the versions of the part entity.

Still taking the model listed above as an example, the model B of the version Vb0 may be used as a child model of the model A of the version Va1, and the model A of the version Va1 may be used as a parent model of the model B of the version Vb0; or the model B of the version Vb0 may be used as a child model of the model A of the version Va2, and the model A of the version Va2 may be used as a parent model of the model B of the version Vb0 as well.

It should be noted that the several association relationships listed above are only examples, and any of the association relationships established between the data model of the target physical entity and the data model of the part entity contained therein are applicable to the embodiments of the present disclosure, and are not specifically limited herein.

Optionally, the data model may be divided into two main types, i.e., the data model includes a structural data model and a predefined data model, and one structural data model corresponds to at least one predefined data model. For example, for a target physical entity (a car), a first data model A corresponding thereto may include a structural data model A1 and a predefined data model A2; for a part entity (a wheel) on the car, a second data model B corresponding thereto may include a structural data model B1 and a predefined data model B2.

In embodiments of the present disclosure, the structural data model at least includes a description, i.e., an attribute name, and a data type, of an attribute; and the predefined data model is used to record a set of specific values of the attributes of the structural data model corresponding to the predefined data model, i.e., the predefined data model refers to a data model carrying a set of specification parameter initial values.

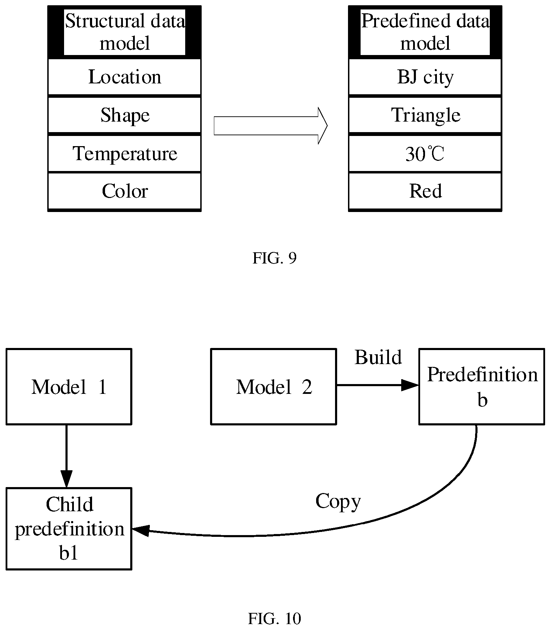

FIG. 9 is a schematic diagram of a structural data model and a predefined data model in embodiments of the present disclosure. In FIG. 9, the structural data model A1 defines that the structure of a certain type of things contains 4 attributes, namely, a location, a shape, a temperature, and a color, and the predefined data model A2 is the model data that carries a set of initial values of these 4 attributes. For example, the location is BJ city, the shape is triangle, the temperature is 30°C, and the color is red. It should be noted that the data type corresponding to each attribute is not shown in FIG. 9. In embodiments of the present disclosure, the data types corresponding to different attributes may be the same (e.g., the data types corresponding to the shape attribute and the color attribute are the same), or different (e.g., the data types corresponding to the temperature attribute and the color attribute are different), which is required to be determined based on the actual situation, and will not be specifically limited herein.

In the embodiments of the present disclosure, the difference between the predefinition and the object is that: 1. the predefined data model belongs to the product at the engineering development stage, not at the operation stage, while the object should be generated at the operation stage; and 2. the attribute values of the object are the values at the actual operation stage, while the predefined data model carries only a preset set of specification initial values.

In conjunction with the system enumerated above, based on the characteristics of a certain part entity object, a set of initial values is configured for the data model of the part entity to generate a predefined data model, and the creation process is as follows.

S1: the user selects a data model (i.e., a structural data model contained in the data model) through the model development client, and creates a predefined data model (i.e., a predefined data model corresponding to the structural data model) of the data model.

S2: the user enters the editing interface of the predefined data model, where the predefined data model contains all the attributes of the data model, and the user assigns initial values to these attributes on the editing interface.

S3: after the user finishes editing, the user sends a creation request to the model database, where the request contains a session ID, a request ID, and data of the predefined data model created by the user.

S4: the model database, after receiving the request, parses the session ID and the request ID in the request for legitimacy verification, and then parses out the predefined data model data in the request, the database assigns a unique identification for the created predefined data model, i.e., generates a GUID, and serializes the predefined data model into a binary stream, which is stored in the form of key-value. The key is the generated GUID, which is used as a unique index for querying. The database is internally partitioned to have a predefined data model storage area in which all predefined data models are stored.

On the basis of combining the two types of data models enumerated above, if the data model also includes model version information, the step S22 may mean: establishing an association relationship between at least one version of the structural data model of the target physical entity and at least one version of the predefined data model of the part entity.

Accordingly, if the association relationship is a parent-child structure as enumerated above, it may be an association relationship I: the predefined data model of the part entity is a child model of the structural data model of the target physical entity; and the structural data model of the target physical entity is a unique parent model of the predefined data model of the part entity.

For example, for a target physical entity (a car), a first data model A corresponding thereto may include a structural data model A1 (including versions Va1 and Va2) and a predefined data model A2 (including versions Va1 and Va2); and for a part entity (a wheel) of the car, a second data model B corresponding thereto may include a structural data model B1 (including version Vb0) and a predefined data model B2 (including version Vb0). Then, in performing the step S22, an association relationship may be established only between the predefined data model B2 of the version Vb0 and the structural data model A1 of the version Va1, an association relationship may be established only between the predefined data model B2 of the version Vb0 and the structural data model A1 of the version Va2, or an association relationship may be established between the predefined data model B2 of the version Vb0 and the structural data model A1 of the versions Va1 and Va2.

In another optional implementation, step S22 may also refer to: establishing an association relationship between at least one version of the predefined data model of the target physical entity and at least one version of the predefined data model of the part entity.

Accordingly, if the association relationship is a parent-child structure as enumerated above, it may be an association relationship II: the predefined data model of the part entity is a child model of the predefined data model of the target physical entity; and the predefined data model of the target physical entity is a unique parent model of the predefined data model of the part entity.

Still taking the above-described enumerated models as an example, when performing the step S22, an association relationship may be established only between the predefined data model B2 of the version Vb0 and the predefined data model A2 of the version Va1, an association relationship may be established only between the predefined data model B2 of the version Vb0 and the predefined data model A2 of the version Va2, or an association relationship may be established only between the predefined data model B2 of the version Vb0 and the predefined data model A2 of the versions Va1 and Va2.

It should be noted that the several association relationships enumerated above are merely illustrative, and any of the manners of establishing an association relationship between a target physical entity and the data model of the part entity contained therein is applicable to the embodiments of the present disclosure, and is not specifically limited herein.

In combination with the system enumerated above, the user selects a predefined data model of the part entity to be associated to a certain version of the data model of the created physical entity as a child model of the data model to form a parent-child structure, and the specific process is as follows.

S1: the user selects a certain data model for editing on the model development client interface.

S2: on the editing interface of the data model, the user selects a predefinition, adds it to the data model, and renames the predefinition added to the model.

S3: after the user finishes editing, the user sends an editing request to the model database, and the model database, after receiving the request, parses the session ID and the request ID in the request for legitimacy verification, and then parses out the editing information which is the GUID and the version number of the data model selected by the user and the GUID and the name renamed by the user of the child predefined data model added, in the request. and the database retrieves the predefined data model in the predefined data model storage area of the based on the GUID of the predefinition, then copies the data and generates a new GUID, replaces the GUID and the name in the copied data with the new GUID and the name in the editing information, and serializes the newly generated predefined data, the GUID and the version number of the parent model to which the predefinition is associated, into a binary stream, which is stored in the form of key-value. The key is the GUID of the newly generated predefinition, which is used as a unique index for querying. The database is internally partitioned to have a child predefined data model storage area, in which all the child predefined data models are stored.

As shown in FIG. 10, which is a parent-child model structure enumerated in embodiments of the present disclosure, this composite model of the parent-child structure contains at least the following three aspects: 1. at least two different data models, i.e. a first data model and at least a second data model, existing; 2. at least 2 attributes, spatial and temporal attributes, of the model existing, i.e., at least inherent attribute of the data model existing; and 3. a predefined data model generated by at least one of the data models existing.

Taking a target physical entity 1 and a part entity 1 contained therein as an example, a structural data model of the target physical entity 1 is a model 1, and a structural data model of the part entity 1 is a model 2. A predefined model b of the model 2 is first built, and then the predefined model b is copied as a child predefined model b1, and an association relationship is established between the child predefined model b1 and the model 1 to form a parent-child model structure.

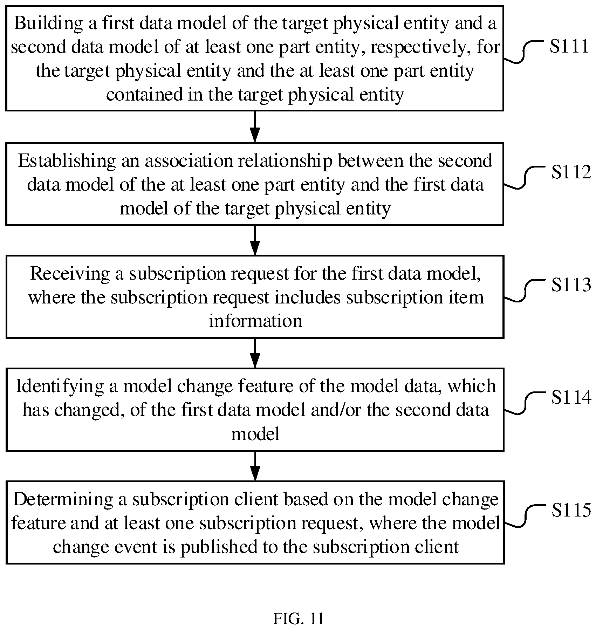

Referring to FIG. 11, which an implementation flowchart of a model building method for a target physical entity provided by embodiments of the present disclosure, a specific implementation flow of the method includes the following steps S111-S115.

S111: a first data model of the target physical entity and a second data model of at least one part entity are built, respectively, for the target physical entity and the at least one part entity contained in the target physical entity.

The data model is at least provided with a model attribute, the model attribute represents model features of different types of entities, and the different types of entities include the target physical entity or the part entity. Optionally, the model attribute includes a model identification, a name, a version, a temporal attribute, a spatial attribute, and a description.

The name is the model name herein, the version is the model version information herein, and the description may include a description of the model, and may further include a description of the attribute. The model attribute can be specifically described in the above embodiments, and the repetition will not be repeated.

S112: an association relationship is established between the second data model of the at least one part entity and the first data model of the target physical entity.

The manner of establishing the association relationship may be referred to in the above embodiments, and the repetition will not be repeated.

S113: a subscription request for the first data model is received, and the subscription request includes subscription item information.

In embodiments of the present disclosure, the subscription client may send to the system a subscription request for the first data model, and the subscription request includes detailed subscription item information. The subscription item information specifically refers to the details of the model data that the subscription client needs to subscribe to, such as a model change event that the subscription client needs to subscribe to, and such as the model attribute that the subscription client needs to subscribe to.

S114: a model change feature of the model data, which has changed, of the first data model and/or the second data model is identified.

In the embodiments of the present disclosure, the model change feature is used to characterize what information of the model data has changed, and may include the model attribute and the model change event. The model attribute in the model change feature represents an attribute that has changed, and the model change event is an event that is generated in the event that the model data (e.g., the model attribute) changes. If the temporal attribute and the spatial attribute both change respectively, a model change event a may be generated for the change of the temporal attribute, a model change event b may be generated for the change of the spatial attribute respectively, or all the attributes that have changed may be represented by a single model change event, and so on. The event may at least characterize the model data corresponding to before and after the change, and may further include information such as the time of the change.

Optionally, the model change event includes, but is not limited to, a part or all of the following: a creation event, a deletion event, a version upgrade event, a structure change event, and an attribute change event. In other words, in addition to the model attribute changes listed above, corresponding model change events are also generated with respect to the model creation, the deletion, the version upgrade, the structure change, and the like, which are not repeated herein.

S115: a subscription client is determined based on the model change feature and at least one subscription request, and the model change event is published to the subscription client.

The following is mainly a detailed description for the subscription process of the model data in steps S114-S115.

Optionally, the subscription request includes an arbitrary combination in the model change event; or, the subscription request includes an arbitrary combination in the model attribute.

For example, the subscription request may include: a model identification, a name, a version; and, for example, the subscription request may include: a creation event, a deletion event, a version upgrade event. For example: the subscription request may include: a structure change event, an attribute change event, a temporal attribute, a spatial attribute, and so on.

In addition to the various combinations of the relevant subscription methods listed above (which are not listed herein), the model data may also be queried, and an optional implementation is to: obtain a first model identification and an association relationship of a to-be-queried model; and then, query model data of the to-be-queried model and model data of a model associated with the to-be-queried model based on the first model identification and the association relationship. The to-be-queried model is at least one of the first data model of the target physical entity or the second data model of the part entity.

In embodiments of the present disclosure, regardless of whether the to-be-queried model is the first data model or the second data model, the model data of the to-be-queried model and its associated model can be queried by combining the model identification and the association relationship. For example, if the to-be-queried model is a first data model, the model data of the first data model and its associated second data model can be obtained based on the model identification of the first data model and its association relationship, and vice versa, and the repetition will not be repeated.

Optionally, the data model also includes model version information. Thus, in the case where at least one version of the model exists, when obtaining the first model identification of the to-be-queried model and its association relationship, the model version information of the to-be-queried model should also be obtained. Thereby, a query index is built based on the model version information and the first model identification, and the model data of the to-be-queried model is queried based on the query index. A string corresponding to the model version information and a string corresponding to the first model identification may be spliced to obtain the query index. For example, the model identification and the model version information are: GUID and Version, respectively, the query index may be represented as GUID_Version, or may also be represented as Version_GUID, etc., without any specific limitation herein.

Optionally, when querying the model data of the model associated with the to-be-queried model based on the first model identification and the association relationship, a collection of sub-identifications corresponding to the to-be-queried model may be obtained based on the association relationship, and the collection of sub-identifications includes a second model identification of at least one child model, a parent model of which is the to-be-queried model; and then, the model data of the child models queried respectively based on the second model identifications in the collection of sub-identifications may be queried as the model data of the model associated with the to-be-queried model. In the above implementation, a parent-child relationship may be formed between the child model and the parent model, and thus, based on the relationship, the second model identification of each child model with the to-be-queried model as the parent model may be obtained, and then, based on the second model identification, the model data of the child model may be queried.

It should be noted that the query manner in the present disclosure can also query the model data of at least one parent model with the to-be-queried model as a child model, and the specific query process is similar to that described above, so the repetitions will not be repeated.

Optionally, if the child model also contains version information, the above-listed manners can also be used, i.e., the string corresponding to the model version information and the string corresponding to the second model identification of the child model are spliced to obtain a query index, and the relevant data is queried based on the query index, which can be referred to the above embodiments for details, and the repetitions will not be repeated.

It should be noted that the data model listed above may also include a structural data model and a predefined data model, and a parent-child relationship may be established between the data models, based on which several manners of querying model data are listed below.

Manner 1: a method of querying the predefinition based on the model is as follows.

S1: when the user creates a predefinition a based on the model A, the system records the GUID and Version of the model A on data of the predefinition a.

S2: when the system stores the user-created data of the predefinition a, it splices the 2 attribute values of the GUID and Version of the model recorded in the data into a string: GUID_Version, and sets a field storing the string as an index.

S3: when the user queries all the predefinitions created by the model A based on the model A, the system, using the string spliced by the GUID and Version of the model A as an index identification, retrieves in the database, and returns data.

In the above embodiment, based on the model identification and version of a data model, the model data of the predefined data model of the model can be queried.

Manner 2: a method of querying a child predefinition based on a predefinition is as follows.

S1: the user, based on a predefinition a, queries its child predefinitions, and the system, using the model GUID and Version of the model A recorded in the predefinition a as a unique identification, retrieves the model A in the database.

S2: a list of child predefinitions, in which the GUIDs of all child predefinitions are recorded, is stored in the data of the model A, i.e., a list of unique identifications (i.e., the collection of sub-identifications as described above) of all child predefinitions of predefinition a is obtained.

S3: the system, based on the list of unique identifications, retrieves all child predefinitions in the database and returns the data.

In the above embodiment, based on the model identification and version of a data model, and the association relationship of that data model, the model data of all child predefined data models having the predefined data model of that model as the parent model can be queried.

Manner 3: a process of querying, based on a predefinition, all models using the predefinition as a child predefinition is as follows.

S1: when the user adds a predefinition a as a child predefinition of the model B, the system replicates to generate a predefinition a1, and records the unique identification GUID of the predefinition a in the predefinition a1, and uses the unique identification GUID as an index.

S2: the system, when adding the predefinition a1 to the model B as the child predefinition, adds the unique identification GUID of a1 to the list of child predefinitions of model B, splices the GUID and Version of the model B into a string, records the string in the predefinition a1, and uses the string as an index.

S3: when the user queries which models are used by the predefinition a, the system, based on the GUID of the predefinition a, first retrieves the copy predefinition a1 created based on the predefinition a in the database.

S4: the system obtains the GUID and Version of the parent model B recorded in data based on the data of the predefinition a1, and queries, using the GUID and Version of the parent model B as a unique identification, the data of the model B that is the model that uses the predefinition a as a child.

In the above embodiment, based on the model identification and version of a data model, and the association relationship of that data model, the model data of all parent predefined data models having the predefined data model of that model as a child model can be queried.

It should be noted that the several query manners listed above are only simple examples, and any one of the manners of querying model data in combination with the model identification and the association relationship is applicable to the embodiments of the present disclosure, and will not be repeated herein.

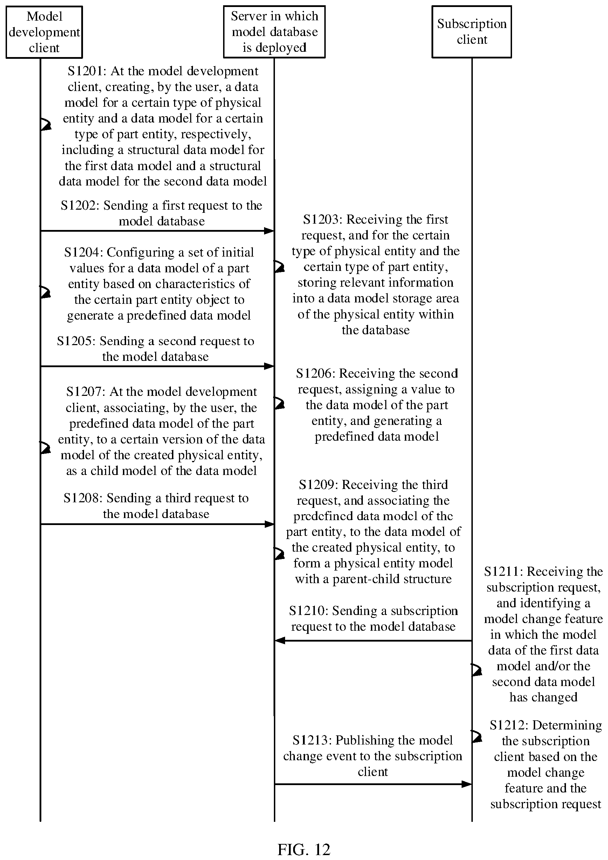

FIG. 12 is a timing diagram of an interaction between a model development client, a model database (a server in which the model database is deployed) and a subscription client in embodiments of the present disclosure. The specific implementation process of the method is as follows.

At step S1201: at the model development client, the user creates a data model for a certain type of physical entity and a data model for a certain type of part entity, respectively, including a structural data model for the first data model and a structural data model for the second data model.

At step S1202: the model development client sends a first request to the model database.

At step S1203: the model database receives the first request, and for the certain type of physical entity and the certain type of part entity, stores relevant information into a data model storage area of the physical entity within the database.

At step S1204: the model development client configures a set of initial values for a data model of a part entity based on characteristics of the certain part entity object to generate a predefined data model.

At step S1205: the model development client sends a second request to the model database.

At step S1206: the model database receives the second request, assigns a value to the data model of the part entity, and generates a predefined data model.

At step S1207: at the model development client, the user associates the predefined data model of the part entity, to a certain version of the data model of the created physical entity, as a child model of the data model.

At step S1208: the model development client sends a third request to the model database.

At step S1209: the model database receives the third request, and associates the predefined data model of the part entity, to the data model of the created physical entity, to form a physical entity model with a parent-child structure.

At step S1210: the subscription client sends a subscription request to the model database.

At step S1211: the model database receives the subscription request, and identifies a model change feature in which the model data of the first data model and/or the second data model has changed.

At step S1212: the model database determines the subscription client based on the model change feature and the subscription request.

At step S1213: the model database publishes the model change event to the subscription client.

In embodiments of the present disclosure, by proposing a model and its building method with universality and compatibility, a unified structure is used to store the data model of the physical entity in the twin objective world, so that the user can build a digital twin model of an arbitrary thing, scenario, or system in a unified platform, thereby satisfying the need for the modeling method to have universality, reusability, and compatibility. In addition, the addition, deletion, modification, checking and data synchronization update of the model data can be realized in a timely manner by means of subscription.

In a second aspect, when the above object is determined to be an event, in order to facilitate differentiation from a physical entity, the event is directly adopted for description.

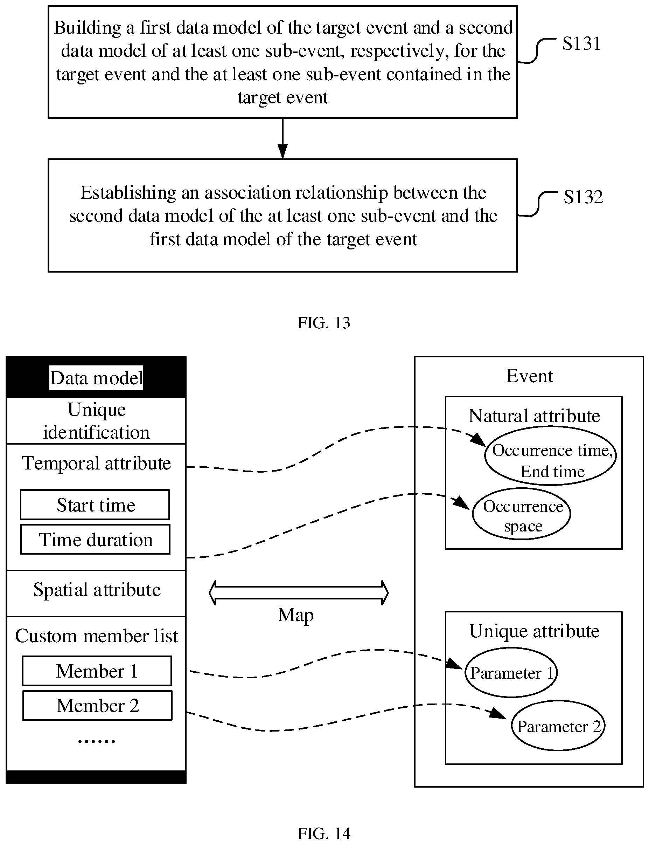

Referring to FIG. 13, which is an implementation flowchart of a model building method for an event provided by embodiments of the present disclosure, a specific implementation flow of the method includes the following steps S131-S132.

S131: a first data model of the target event and a second data model of at least one sub-event are built, respectively, for the target event and the at least one sub-event contained in the target event.

The data model in the embodiments of the present disclosure includes the first data model and the second data model, and the data model is at least provided with an inherent attribute and the inherent attribute denotes a common feature(s) among different types of events. In the present disclosure, the different types of events include different types of target events or different types of sub-events.

For a target event, its inherent attribute is a common feature of different types of target events. For a sub-event, its inherent attribute is a common feature of different types of sub-events. In the objective world, an arbitrary event activity occurring is composed of the space in which the event activity occurs as well as a start time and an end time of the event activity, and the space in which the event occurs in the usual sense is not the positional coordinates of the location where the event occurs, but is an objective thing space in which the event occurs. For example, a conference room in which the meeting occurs, a device in which the alarm occurs, and so on.

Optionally, the inherent attribute includes, but is not limited to, a part or all of the following: a temporal attribute, and a spatial attribute. The spatial attribute is used to characterize a space in which the event occurs; the temporal attribute at least includes a start time and further includes at least one of a time duration or an end time; and the event is the target event or a sub-event.

In embodiments of the present disclosure, the event is the target event or the sub-event. That is, the spatial attribute of the first data model represents the space in which the target event occurs, and the temporal attribute is used to characterize a start time, an end time, and a time duration of the target event. The spatial attribute of the second data model indicates the space where the sub-event occurs, and the temporal attribute is used to characterize a start time, an end time, and a time duration of the sub-event.

In addition, in the embodiments of the present disclosure, the sub-event belongs to a part of the target event. Thus, the inherent attribute of the first data model and the inherent attribute of the second data model may be the same or different. For example, if the space in which the target event occurs is X building, the space in which one of the sub-events contained therein occurs is also X1 building. The different refers to that the inherent attribute of the second data model are more detailed than those of the first data model. For example, the space of the target event is the X1 building, the space of one of the sub-events contains therein is the X2 room in the X1 building, etc.

It should be noted that "event" in the following is of the same meaning, and the repetition will not be repeated.

In addition, considering that each event activity also is also provided with a particular attribute, also known as a unique attribute, that distinguish it from other events, and for example, a learning event has a unique knowledge attribute, while a migration event has a unique route attribute, and so on. Thus, the data model may also include a unique attribute; the unique attribute represents a unique feature of the event, which is a target event or a sub-event. Optionally, the unique attribute includes, but is not limited to: a member collection including at least one custom member. Each custom member is used to map to one unique feature of the target event.

In embodiments of the present disclosure, the custom member(s) may be represented as: a member list or collection, and the member list is used to map to an attribute unique to an arbitrary type of events in the objective world, and each custom member at least includes a name attribute, a value attribute, and a value type attribute. The name attribute is used to characterize a feature name of a unique feature, and for example, if one unique attribute of the target event is temperature, the name can be recorded as "temperature". The value attribute is used to characterize a specific value of a feature value of the unique feature, and for example, if the temperature is 19°C, the value can be recorded as "19". The value type attribute is used to characterize a data type of the feature value, for example, the value type of temperature 19 is the integer, which can be calculated as "int", and if the number of bits is required to be limited to be up to 64, it can be expressed as "int64". It should be noted that the above-listed inherent attribute including the temporal attribute, the spatial attribute is only an example, an arbitrary inherent attribute determined based on the common feature is applicable to the embodiments of the present disclosure, which is not limited herein. The unique attribute is also similar, and the repetitions will not be repeated.

Optionally, in addition to the inherent attribute and the unique attribute listed above, the data model is also provided with a model identification, and the model identification is used to uniquely identify the data model. In an embodiment of the present disclosure, the model identification may be denoted as GUID, for example, a model identification GUID of a target event A is: guid1, and a model identification GUID of a sub-event B contained therein is: guid1.1; and for example, a model identification GUID of a target event C is: guid2, and a model identification GUID of a sub-event D contained therein is: guid3, etc. The uniqueness of an event can be characterized by the model identification.

Referring to FIG. 14, which is a schematic diagram of a data model of an arbitrary event in a twin objective world in embodiments of the present disclosure, the model includes the following portions: (1) a unique identification, which maps to the uniqueness of an arbitrary event in the objective world; (2) a temporal attribute, which maps to a start time and an end time, naturally possessed by an arbitrary event in the objective world, of an activity of the event, the temporal attribute at least containing attributes of a start time and a time duration (or an end time); (3) a spatial attribute, which maps to a space, in which an activity of an arbitrary in the objective world occurs, naturally possessed by the event, the spatial attribute being associated with a physical entity model to express the space where the event activity is located; (4) a custom member(s), which is a member list, where the member collection is used to map to an attribute particular to an arbitrary event in the objective world that distinguish it from other events, and each custom member at least contains a name attribute, a value attribute, and a value type attribute.

As shown in FIG. 14, each member may characterize one of the parameters of the unique attribute of the event, e.g., a member 1 corresponds to a parameter 1, a member 2 corresponds to a parameter 2, etc.

Both the first data model for the event and the second data model for the sub-event in the embodiments of the present disclosure may be represented in the manner shown in FIG. 14.

The following is a detailed description of the model building method in the embodiments of the present disclosure, mainly by taking the data model shown in FIG. 14 as an example.

In embodiments of the present disclosure, the process of model building may be implemented by a system at least including a model database and a model development client.

First, the user creates data models respectively for a certain type of events and a certain type of sub-events, and the process of creating the data model is as follows.

S1: the user, through the model development client, clicks to create a data model for the event, and enters a model name and a description, etc.

The model name can be used to indicate the event (e.g., the target event, or the sub-events contained in the target event) characterized by the data model. For example, the target event is "learning event", a model name of which can be recorded as "learning", and for example, the target event is "meeting event", a model name of which can be recorded as "meeting". Of course, other naming methods can also be used to name the data model, which is not specifically limited herein. The description is a detailed introduction to the data model and the event.

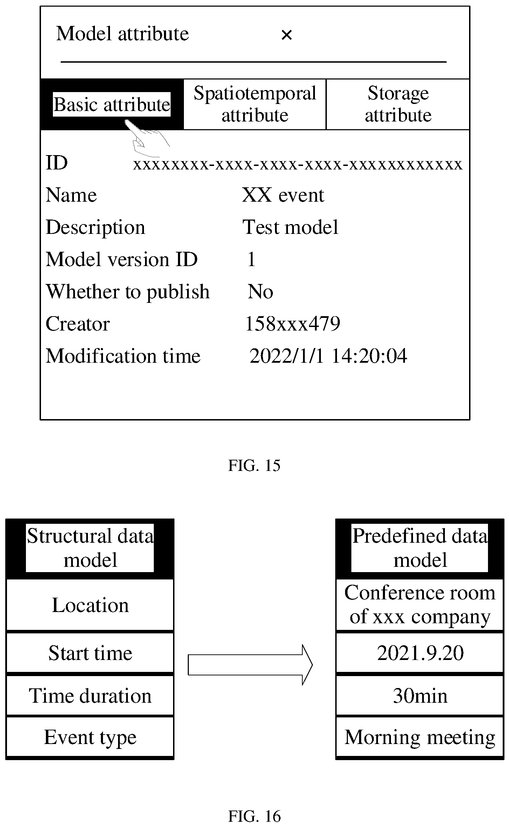

FIG. 15 is a schematic diagram of a seventh editing interface in embodiments of the present disclosure. In the embodiments of the present disclosure, the model attribute may further include, in addition to the temporal attribute and spatial attribute (referred to as spatiotemporal attribute) enumerated above, a basic attribute and a storage attribute. The basic attribute at least includes, but is not limited to, a part or all of the following: a model identification (i.e., a unique identification GUID, which may also be referred to as an ID), a name, a version, and a description.

In addition, the basic attribute may further include whether to publish, a creator, a modification time, and the like.

As shown in FIG. 15, the basic attribute of the model is: a model ID (unique identification) as "xxxxxxxxxx-xxxx-xxxx-xxxxxx-xxxxxxxxxxxxx", where each x is a value in the range of 0-9 or a-f, the name is XX event, the description is test model, the model version ID is 1, whether to publish is no, the creator is 158xxx479, and the modification time is 2022/1/1 14:20:04.

Still taking Fig. 5 as an example, in Fig. 5, the storage attribute of the model is: whether to store historical data: false (no), and a real-time history storage location: terminal.

S2: the model development client generates an initial data model structure based on a user input, and the event model inherently has the following attributes: a model name, a description, a unique identification, an associated space, a start time, a relative offset of time, and a time duration. The unique identification is a GUID, which ensures that the model can still be ensured to be unique when being passed across multiple systems.

At S2, the spatiotemporal attribute including time accuracy, a geometry type, a coordinate system type, coordinates, a relative offset, a rotation angle, and a shape, etc., are illustrated as an example, which is not specifically limited herein.

S3: the user enters the model editing interface, and the editing interface displays the inherent attribute of the event model.

Still taking the third editing interface shown in FIG. 6A as an example, the spatiotemporal attribute, i.e., time accuracy in seconds is displayed on the interface, and the user may click on a symbol to the right of "Time accuracy Second" to display more spatiotemporal attributes. Then taking the fourth editing interface shown in FIG. 6B as an example, the user clicks on to display more temporal attributes, and the repetitions will not be repeated. The repetition will not be repeated. By the above manner, the inherent attribute of the event can be set according to the actual modeling needs, and in addition, the relevant information can be deleted, modified, etc. to realize the change of inherent attributes.

S4: since in the objective world, each event necessarily occurs in a certain space, the user selects a certain thiing model to be associated through associating the attribute of space on the editing interface, so as to serve as the space to which the event belongs; and this option is a mandatory associated item.

In the embodiments of the present disclosure, the data model of the (sub)event can be associated with the data model of the thing entity by this step.

S5: since the inherent attribute only characterizes a common attribute in the objective event, and different types of events have their respective unique attributes, a function of customizing member is provided on the editing interface, so that the user can add the member to characterize the unique attribute of the event based on the needs of the actual modeling.

Still taking the fifth editing interface shown in FIG. 7 as an example, this interface is an initial unique attribute editing interface, where the user can add the member by clicking "new" to characterize the unique attributes of the thing, and information related to the member includes a serial number (a serial number of the member, for example, the serial number of the member 1 is 1), a name, a type, a value, accuracy, and whether to be used as an index, etc.

Still taking the sixth editing interface shown in FIG. 8 as an example, this interface indicates that the user has added a member a serial number of which is 1, a name of which is temperature, a type of which is Int64 (i.e., 64-bit integer data), and a value of which is 0, i.e., which indicates that the event is provided with a unique attribute of temperature, and the specific value is 0.

By the above manners, it is possible to add a member to characterize the unique attribute of the thing based on the needs of the actual modeling, in addition to deleting and modifying the member-related information, etc., to realize the change of the particular attribute.

S6: after the user finishes editing, the user sends a creation request to the model database, the request contains a session ID, a request ID, and user's editing information, and the editing information refers to thing model information associated with the event model and the member information added by the user, in which the thing model information is expressed as the unique identification GUID of the thing model, the member information is a list of a set of user-defined parameters, and each parameter contains a name of the parameter and a data type of the parameter, which is manifested in the form of a string and an enumeration type.

S7: the model database, after receiving the request, parses the session ID and the request ID in the request for legitimacy verification, and then parses out the editing information in the request, and the database assigns a unique identification to the created event model, i.e., generates a GUID, and serializes the thing model information and the member list in the editing information into a binary stream, which is stored in the form of key-value. The key is the generated GUID, which is used as a unique index for querying. The database is internally partitioned to have a data model storage area of the event, and all the data models about the event are stored in this area. Since the inherent attribute of the data model of the event is the attribute defined internally in the system, there is no need to additionally store the fixed attribute.

Based on the above manner, the first data model of the target event and the second data model of the sub-event contained in the target event may be created. It may also refer to the creation of a structural data model in the data model, which, in combination with the process of creating a predefined data model as enumerated below, can be composed into a model corresponding to the (sub)event containing the structural data model and the predefined data model.

In embodiments of the present disclosure, the model is naturally provided with a unique identification, a temporal attribute, and a spatial attribute, and the temporal attribute at least contains a start time, a time duration (or an end time), which do not need to be defined by the user. A custom member list is used to map to attributes specific to different types of event activities. A unified structure is used to allow for the storing and processing of the different models that are built.

S132: an association relationship is established between the second data model of the at least one sub-event and the first data model of the target event.

In embodiments of the present disclosure, considering that there is an association relationship between the sub-event and the target event, an association relationship may be established between the second data model and the first data model accordingly, facilitating the addition, deletion, modification, checking, subscription, and the like of the data.

Optionally, the association relationship means that: the second data model of the sub-event is a child model of the first data model of the target event; and the first data model of the target event is a unique parent model of the second data model of the sub-event.

That is, the present disclosure proposes a parent-child model structure that can form a composite model including the first data model and at least one second data model. For example, if the target object event is a learning event, and the first data model corresponding to it is a model A, and one of the sub-events of the target event is a Chinese class learning sub-event, and the second data model corresponding to it is a model B, then the model B belongs to a child model of the model A. Optionally, the data model in the embodiments of the present disclosure further includes model version information (referred to as version). On this basis, an optional implementation of step S132 is to establish an association relationship between at least one version of the first data model of the target event and at least one version of the second data model of the sub-event.

Still taking the above-listed model as an example, the model A has two versions, Va1 and Va2, and the model B has one version, Vb0, then in performing the step S22, an association relationship may be established only between the model B of the version Vb0 and the model A of the version Va1, or an association relationship may be established only between the model B of the version Vb0 and the model A of the version Va2, or an association relationship may be established between the model B of the version Vb0 and the model A of both the versions Va1 and Va2.

Optionally, in the case where the data model also includes model version information, the association relationship means that: the second data model of one of the versions of the sub-event is a child model of the first data model of one of the versions of the target event; and the first data model of one of the versions of the target event is a unique parent model of the second data model of one of the versions of the sub-event.

Still taking the models listed above as an example, the model B of the version Vb0 may be used as a child model of the model A of the version Va1, and the model A of the version Va1 may be used as a parent model of the model B of the version Vb0; or the model B of the version Vb0 may be used as a child model of the model A of the version Va2, and the model A of the version Va2 may be used as a parent model of the model B of the version Vb0 as well.

Optionally, the data model may be divided into two main types, i.e., the data model includes a structural data model and a predefined data model, and one structural data model corresponds to at least one predefined data model. For example, for a target event, a first data model A corresponding thereto may include a structural data model A1 and a predefined data model A2; for a sub-event on the learning event, the second data model B corresponding thereto may include a structural data model B1 and a predefined data model B2.

In embodiments of the present disclosure, the structural data model at least includes a description, i.e., an attribute name, and a data type, of an attribute; and the predefined data model is used to record a set of specific values of the attributes of the structural data model corresponding to the predefined data model, i.e., the predefined data model refers to a data model carrying a set of specification parameter initial values.

FIG. 16 is a schematic diagram of another structural data model and predefined data model in embodiments of the present disclosure. In FIG. 16, the structural data model A1 defines that the structure of a certain type of events contains 4 attributes, namely, a location, a start time, a time duration, and an event type, and the predefined data model A2 is the model data that carries a set of initial values for 4 four attributes. For example, the location is the conference room of xxx company, the start time is 2021.9.20, the time duration is 30min (minutes), and the event type is morning meeting. It should be noted that the data type corresponding to each attribute is not shown in FIG. 16. In the embodiments of the present disclosure, the data types corresponding to different attributes may be the same (e.g., the data types corresponding to the location attribute and the event type attribute are the same), or different (e.g., the data types corresponding to the location attribute and the time duration attribute are different), which is required to be determined based on the actual situation, and will not be specifically limited herein.

In the embodiments of the present disclosure, the difference between the predefinition and the object is that: 1. the predefined data model belongs to the product at the engineering development stage, not at the operation stage, while the object should be generated at the operation stage; and 2. the attribute values of the object are the values at the actual operation stage, while the predefined data model carries only a preset set of specification initial values.

In conjunction with the system enumerated above, based on characteristics of a certain sub-event, a set of initial values is configured for the data model of the sub-event to generate a predefined data model, and the creation process is as follows.

S1: the user selects a data model (i.e., a structural data model contained in the data model) through the model development client, and creates a predefined data model (i.e., a predefined data model corresponding to the structural data model) of the data model.

S2: the user enters the editing interface of the predefined data model, where the predefined data model contains all the attributes of the data model, and the user assigns initial values to these attributes on the editing interface.

S3: after the user finishes editing, the user sends a creation request to the model database, where the request contains a session ID, a request ID, and data of the predefined data model created by the user.

S4: the model database, after receiving the request, parses the session ID and the request ID in the request for legitimacy verification, and then parses out the predefined data model data in the request, the database assigns a unique identification for the created predefined data model, i.e., generates a GUID, and serializes the predefined data model into a binary stream, which is stored in the form of key-value. The key is the generated GUID, which is used as a unique index for querying. The database is internally partitioned to have a predefined data model storage area in which all predefined data models are stored.

On the basis of combining the two types of data models enumerated above, if the data models also include model version information, the step S132 may mean: establishing an association relationship between at least one version of the structural data model of the target event, and at least one version of the predefined data model of the sub-event.

Accordingly, if the association relationship is a parent-child structure as enumerated above, it may be an association relationship I: the predefined data model of the sub-event is a child model of the structural data model of the target event; and the structural data model of the target event is the only parent model of the predefined data model of the sub-event.

For example, for the target event, a first data model A corresponding thereto may include a structural data model A1 (including versions Va1 and Va2) and a predefined data model A2 (including versions Va1 and Va2); and for a sub-event on the learning event, the second data model B corresponding thereto may include a structural data model B1 (including version Vb0) and a predefined data model B2 (including version Vb0). Then, in performing the step S22, an association relationship may be established only between the predefined data model B2 of the version Vb0 and the structural data model A1 of the version Va1, an association relationship may be established only between the predefined data model B2 of the version Vb0 and the structural data model A1 of the version Va2, or an association relationship may be established between the predefined data model B2 of the version Vb0 and the structural data model A1 of the versions Va1 and Va2.

In another optional embodiment, step S132 may also refer to: establishing an association relationship between at least one version of the predefined data model of the target event and at least one version of the predefined data model of the sub-event.

Accordingly, if the association relationship is a parent-child structure as enumerated above, it may be an association relationship II: the predefined data model of the sub-event is a child model of the predefined data model of the target event; and the predefined data model of the target event is a unique parent model of the predefined data model of the sub-event.

Still taking the above-described enumerated models as an example, when performing the step S132, an association relationship may be established only between the predefined data model B2 of the version Vb0 and the predefined data model A2 of the version Va1, an association relationship may be established only between the predefined data model B2 of the version Vb0 and the predefined data model A2 of the version Va2, or an association relationship may be established only between the predefined data model B2 of the version Vb0 and the predefined data model A2 of the versions Va1 and Va2.

In conjunction with the system enumerated above, the user selects a predefined data model of the sub-event to be associated to a certain version of the data model of the created event as a child model of the data model, forming a parent-child structure, and the specific process is as follows.

S1: the user selects a certain data model for editing on the model development client interface.

S2: on the editing interface of the data model, the user selects a predefinition, adds it to the data model, and renames the predefinition added to the model.

S3: after the user finishes editing, the user sends an editing request to the model database, and the model database, after receiving the request, parses the session ID and the request ID in the request for legitimacy verification, and then parses out the editing information which is the GUID and the version number of the data model selected by the user and the GUID and the name renamed by the user of the child predefined data model added, in the request. and the database retrieves the predefined data model in the predefined data model storage area of the based on the GUID of the predefinition, then copies the data and generates a new GUID, replaces the GUID and the name in the copied data with the new GUID and the name in the editing information, and serializes the newly generated predefined data, the GUID and the version number of the parent model to which the predefinition is associated, into a binary stream, which is stored in the form of key-value. The key is the GUID of the newly generated predefinition, which is used as a unique index for querying. The database is internally partitioned to have a child predefined data model storage area, in which all the child predefined data models are stored.

Still taking the parent-child model structure shown in FIG. 10 as an example, this composite model of parent-child structure contains at least the three aspects enumerated above, and the repetitions will not be repeated.

Taking a target event 1 and a sub-event 1 contained therein as an example, a structural data model of the target event 1 is a model 1, and a structural data model of the sub-event 1 is a model 2. A predefined model b of the model 2 is first built, and then the predefined model b is copied as a child predefined model b1, and an association relationship is established between the child predefined model b1 and the model 1 to form the parent-child model structure.

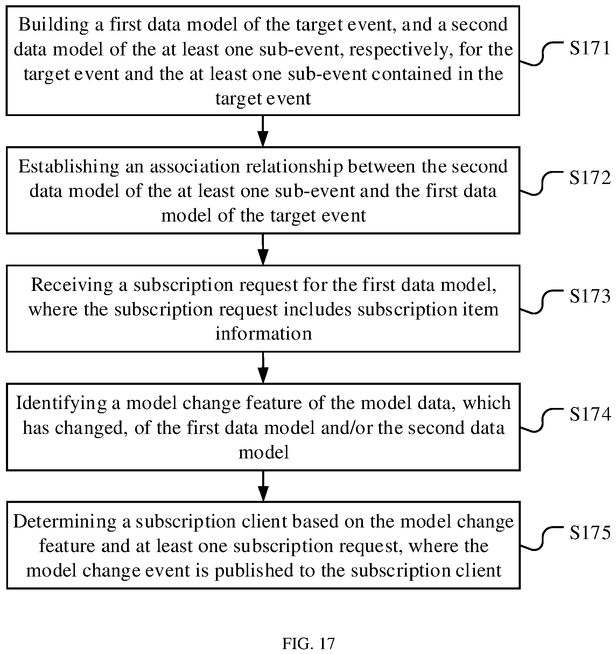

Referring to FIG. 17, which is an implementation flowchart of a model building method for an event provided by embodiments of the present disclosure, a specific implementation flow of the method includes the following steps S171-S175.

S171: a first data model of the target event, and a second data model of the at least one sub-event are built, respectively, for the target event and the at least one sub-event contained in the target event. The data model is at least provided with a model attribute, the model attribute represents model features of different types of event, and the different types of events include the target event or the sub-event. Optionally, the model attribute includes a model identification, a name, a version, a temporal attribute, a spatial attribute, and a description.

The name is the model name herein, the version is the model version information herein, and the description may include a description of the model, and may further include a description of the attribute. The model attribute can be specifically described in the above embodiments, and the repetition will not be repeated.

S172: an association relationship is established between the second data model of the at least one sub-event and the first data model of the target event.

The manner of establishing the association relationship may be referred to in the above embodiments, and the repetition will not be repeated.

S173: a subscription request for the first data model is received, and the subscription request includes subscription item information.

In embodiments of the present disclosure, the subscription client may send to the system a subscription request for the first data model, and the subscription request includes detailed subscription item information. The subscription item information specifically refers to the details of the model data that the subscription client needs to subscribe to, such as a model change event that the subscription client needs to subscribe to, and such as the model attribute that the subscription client needs to subscribe to.

S174: a model change feature of the model data, which has changed, of the first data model and/or the second data model is identified.

In the embodiments of the present disclosure, the model change feature is used to characterize what information of the model data has changed, and may include the model attribute and the model change event. The model attribute in the model change feature represents an attribute that has changed, and the model change event is an event that is generated in the event that the model data (e.g., the model attribute) changes. If the temporal attribute and the spatial attribute both change respectively, a model change event a may be generated for the change of the temporal attribute, a model change event b may be generated for the change of the spatial attribute respectively, or all the attributes that have changed may be represented by a single model change event, and so on. The event may at least characterize the model data corresponding to before and after the change, and may further include information such as the time of the change.

Optionally, the model change event includes, but is not limited to, a part or all of the following: a creation event, a deletion event, a version upgrade event, a structure change event, and an attribute change event. In other words, in addition to the model attribute changes listed above, corresponding model change events are also generated with respect to the model creation, the deletion, the version upgrade, the structure change, and the like, which are not repeated herein.

S175: a subscription client is determined based on the model change feature and at least one subscription request, and the model change event is published to the subscription client.

The following is mainly a detailed description for the subscription process of the model data in steps S174-S175.

Optionally, the subscription request includes an arbitrary combination in the model change event; or, the subscription request includes an arbitrary combination in the model attribute. For example, the subscription request may include: a model identification, a name, a version; and, for example, the subscription request may include: a creation event, a deletion event, a version upgrade event. For example: the subscription request may include: a structure change event, an attribute change event, a temporal attribute, a spatial attribute, and so on.

In addition to the various combinations of the relevant subscription methods listed above (which are not listed herein), the model data may also be queried, and an optional implementation is to: obtain a first model identification and an association relationship of a to-be-queried model; and then, query model data of the to-be-queried model and model data of a model associated with the to-be-queried model based on the first model identification and the association relationship. The to-be-queried model is at least one of the first data model of the target event and the second data model of the sub-event.

In embodiments of the present disclosure, regardless of whether the to-be-queried model is the first data model or the second data model, the model data of the to-be-queried model and its associated model can be queried by combining the model identification and the association relationship. For example, if the to-be-queried model is a first data model, the model data of the first data model and its associated second data model can be obtained based on the model identification of the first data model and its association relationship, and vice versa, and the repetition will not be repeated.

Optionally, the data model also includes model version information. Thus, in the case where at least one version of the model exists, when obtaining the first model identification of the to-be-queried model and its association relationship, the model version information of the to-be-queried model should also be obtained. Thereby, a query index is built based on the model version information and the first model identification, and the model data of the to-be-queried model is queried based on the query index. A string corresponding to the model version information and a string corresponding to the first model identification may be spliced to obtain the query index. For example, the model identification and the model version information are: GUID and Version, respectively, the query index may be represented as GUID_Version, or may also be represented as Version_GUID, etc., without any specific limitation herein.

Optionally, when querying the model data of the model associated with the to-be-queried model based on the first model identification and the association relationship, a collection of sub-identifications corresponding to the to-be-queried model may be obtained based on the association relationship, and the collection of sub-identifications includes a second model identification of at least one child model, a parent model of which is the to-be-queried model; and then, the model data of the child models queried respectively based on the second model identifications in the collection of sub-identifications may be queried as the model data of the model associated with the to-be-queried model.

In the above implementation, a parent-child relationship may be formed between the child model and the parent model, and thus, based on the relationship, the second model identification of each child model with the to-be-queried model as the parent model may be obtained, and then, based on the second model identification, the model data of the child model may be queried.

It should be noted that the query manner in the present disclosure can also query the model data of at least one parent model with the to-be-queried model as a child model, and the specific query process is similar to that described above, so the repetitions will not be repeated.

Optionally, if the child model also contains version information, the above-listed manners can also be used, i.e., the string corresponding to the model version information and the string corresponding to the second model identification of the child model are spliced to obtain a query index, and the relevant data is queried based on the query index, which can be referred to the above embodiments for details, and the repetitions will not be repeated.

It should be noted that the data model listed above may also include a structural data model and a predefined data model, and a parent-child relationship may be established between the data models, based on which several manners of querying model data are listed below.

Manner 1: a method of querying the predefinition based on the model is as follows.

S1: when the user creates a predefinition a based on the model A, the system records the GUID and Version of the model A on data of the predefinition a.

S2: when the system stores the user-created data of the predefinition a, it splices the 2 attribute values of the GUID and Version of the model recorded in the data into a string: GUID_Version, and sets a field storing the string as an index.

S3: when the user queries all the predefinitions created by the model A based on the model A, the system, using the string spliced by the GUID and Version of the model A as an index identification, retrieves in the database, and returns data.

In the above embodiment, based on the model identification and version of a data model, the model data of the predefined data model of the model can be queried.

Manner 2: a method of querying a child predefinition based on a predefinition is as follows.

S1: the user, based on a predefinition a, queries its child predefinitions, and the system, using the model GUID and Version of the model A recorded in the predefinition a as a unique identification, retrieves the model A in the database.

S2: a list of child predefinitions, in which the GUIDs of all child predefinitions are recorded, is stored in the data of the model A, i.e., a list of unique identifications (i.e., the collection of sub-identifications as described above) of all child predefinitions of predefinition a is obtained.

S3: the system, based on the list of unique identifications, retrieves all child predefinitions in the database and returns the data.

In the above embodiment, based on the model identification and version of a data model, and the association relationship of that data model, the model data of all child predefined data models having the predefined data model of that model as the parent model can be queried.

Manner 3: a process of querying, based on a predefinition, all models using the predefinition as a child predefinition is as follows.

S1: when the user adds a predefinition a as a child predefinition of the model B, the system replicates to generate a predefinition a1, and records the unique identification GUID of the predefinition a in the predefinition a1, and uses the unique identification GUID as an index.

S2: the system, when adding the predefinition a1 to the model B as the child predefinition, adds the unique identification GUID of a1 to the list of child predefinitions of model B, splices the GUID and Version of the model B into a string, records the string in the predefinition a1, and uses the string as an index.

S3: when the user queries which models are used by the predefinition a, the system, based on the GUID of the predefinition a, first retrieves the copy predefinition a1 created based on the predefinition a in the database.

S4: the system obtains the GUID and Version of the parent model B recorded in data based on the data of the predefinition a1, and queries, using the GUID and Version of the parent model B as a unique identification, the data of the model B that is the model that uses the predefinition a as a child.

In the above embodiment, based on the model identification and version of a data model, and the association relationship of that data model, the model data of all parent predefined data models having the predefined data model of that model as a child model can be queried.

It should be noted that the several query manners listed above are only simple examples, and any one of the manners of querying model data in combination with the model identification and the association relationship is applicable to the embodiments of the present disclosure, and will not be repeated herein.

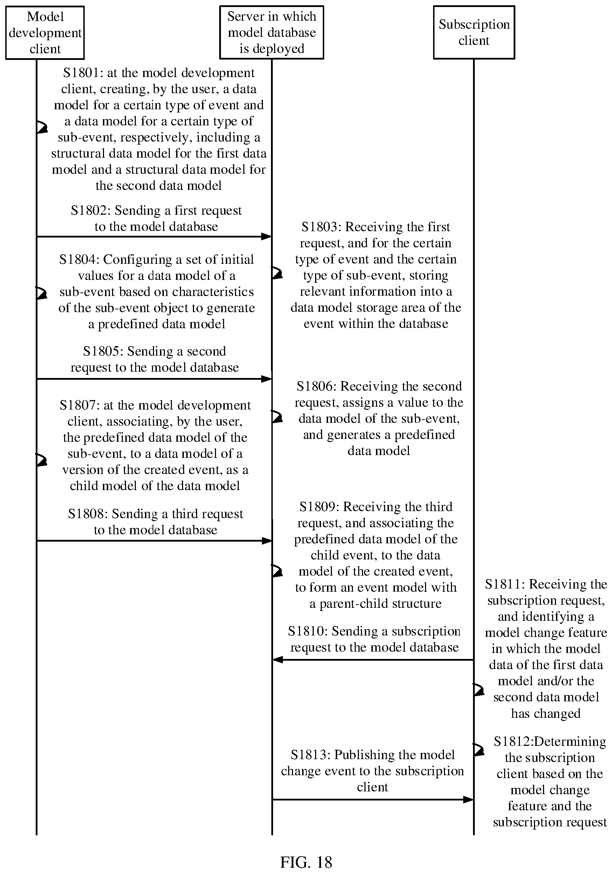

FIG. 18 is a timing diagram of an interaction between another model development client, a model database (a server in which the model database is deployed) and a subscription client in embodiments of the present disclosure. The specific implementation process of the method is as follows.

At step S1801: at the model development client, the user creates a data model for a certain type of event and a data model for a certain type of sub-event, respectively, including a structural data model for the first data model and a structural data model for the second data model.

At step S1802: the model development client sends a first request to the model database.

At step S1803: the model database receives the first request, and for the certain type of event and the certain type of sub-event, stores relevant information into a data model storage area of the event within the database.

At step S1804: the model development client configures a set of initial values for a data model of a sub-event based on characteristics of the sub-event object to generate a predefined data model.

At step S1805: the model development client sends a second request to the model database.

At step S1806: the model database receives the second request, assigns a value to the data model of the sub-event, and generates a predefined data model.

At step S1807: at the model development client, the user associates the predefined data model of the sub-event, to a data model of a version of the created event, as a child model of the data model.

At step S1808: the model development client sends a third request to the model database.

At step S1809: the model database receives the third request, and associates the predefined data model of the child event, to the data model of the created event, to form an event model with a parent-child structure.

At step S1810: the subscription client sends a subscription request to the model database.

At step S1811: the model database receives the subscription request, and identifies a model change feature in which the model data of the first data model and/or the second data model has changed.

At step S1812: the model database determines the subscription client based on the model change feature and the subscription request.

At step S1813: the model database publishes the model change event to the subscription client.

In embodiments of the present disclosure, a model structure for events occurring in the objective world and a method for building the same are proposed, which are universal and compatible, solving the problem of the lack of a twin event modeling means in the market at present, and allowing users to manage the full life cycle of events occurring in the objective world in a unified platform.

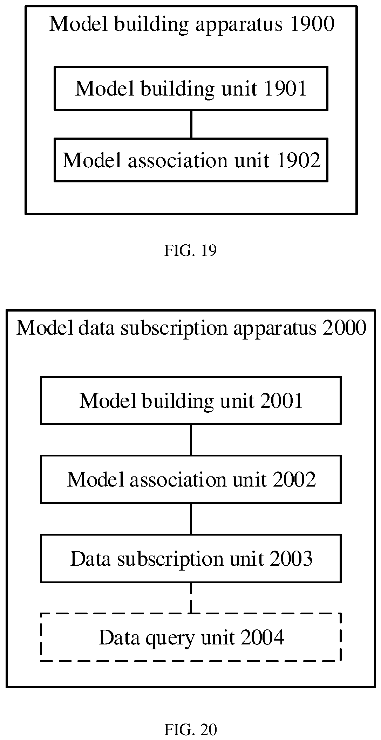

Based on the same inventive conception, embodiments of the present disclosure also provide a model building apparatus. As shown in FIG. 19, which is a schematic diagram of a structure of the model building apparatus 1900, it may include: a model building unit 1901, configured for building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; and a model association unit 1902, configured for establishing an association relationship between the second data model of the at least one sub-object and the first data model of the target object.

Optionally, the target object is a target physical entity and the sub-object is a part entity; or the target object is a target event and the sub-object is a sub-event.

Optionally, the data model is further provided with a model identification, and the model identification is used to uniquely identify the data model.

Optionally, the association relationship includes that the second data model of the sub-object is a child model of the first data model of the target object; and the first data model of the target object is a unique parent model of the second data model of the sub-object.

Optionally, the data model further includes model version information; where the model association unit 1902 is further configured to: establish an association relationship between at least one version of the first data model of the target object and at least one version of the second data model of the sub-object.

The model association unit 1902 is further configured to: an association relationship between at least one version of a structural data model of the target object, and at least one version of a predefined data model of the sub-object; where the predefined data model is a child model of the structural data model, and the structural data model is a unique parent model of the predefined data model.

Based on the same inventive concept, embodiments of the present disclosure also provide a model data subscription apparatus. As shown in FIG. 20, which is a schematic diagram of a structure of the model data subscription apparatus 2000, it may include: a model building unit 2001, configured for building a first data model of a target object and a second data model of at least one sub-object respectively for the target object and the at least one sub-object contained in the target object, where a data model is at least provided with an inherent attribute, the inherent attribute represents a common feature of different types of objects, and the different types of objects includes the target object or the sub-object; a model association unit 2002, configured for establishing an association relationship between the second data model of the at least one sub-object and the first data model of the target object; and a data subscription unit 2003, configured for receiving a subscription request for the first data model, where the subscription request includes subscription item information; identifying a model change feature of a change in model data of the first data model and/or the second data model, where the model change feature includes a model attribute and a model change event; and determining a subscription client based on the model change feature and at least one subscription request, publishing the model change event to the subscription client.

Optionally, the target object is a target physical entity and the sub-object is a part entity; or the target object is a target event and the sub-object is a sub-event.

Optionally, the model attribute includes a model identification, a name, a version, a temporal attribute, a spatial attribute, and a description.

Optionally, the model change event includes: a creation event, a deletion event, a version upgrade event, a structure change event, and an attribute change event.

Optionally, the subscription request includes an arbitrary combination in the model change event; or, the subscription request includes an arbitrary combination in the model attribute.

Optionally, the apparatus further includes: a data query unit 2004, configured for obtaining a first model identification and an association relationship of a to-be-queried model, where the to-be-queried model is at least one of the first data model of the target object or the second data model of the sub-object; and querying model data of the to-be-queried model and model data of a model associated with the to-be-queried model based on the first model identification and the association relationship.

Optionally, the data model further includes model version information; where the data query unit 2004 is further configured for obtaining model version information of the to-be-queried model.

The data query unit 2004 is further configured for building a query index based on the model version information and the first model identification, and querying model data of the to-be-queried model based on the query index.

Optionally, the data query unit 2004 is further configured for obtaining a collection of sub-identifications corresponding to the to-be-queried model based on the association relationship, where the collection of sub-identifications includes a second model identification of at least one child model, a parent model of which is the to-be-queried model; and querying model data of child models respectively based on respective second model identifications in the collection of sub-identifications as the model data of the model associated with the to-be-queried model.

For the convenience of description, the above sections are described separately as modules (or units) in accordance with functional division. Of course, it is possible to realize the functions of the modules (or units) in the same or more software or hardware when implementing the present disclosure.

Although preferred embodiments of the present disclosure have been described, those embodiments can be additionally changed and modified once the basic inventive concepts are known to those skilled in the art. Therefore, the appended claims are intended to be construed to include the preferred embodiments as well as all changes and modifications that fall within the scope of the present disclosure. Obviously, those skilled in the art can make various changes and variations to the present disclosure without departing from the spirit and scope of the present disclosure. Thus, to the extent that such modifications and variations of the present disclosure fall within the scope of the present claims and their technical equivalents, the present disclosure is intended to encompass such modifications and variations.

## Claims

1. A model building method, comprising:
building a first data model of a target object and a second data model of at least one sub-object respectively for the target object and the at least one sub-object contained in the target object, wherein a data model is at least provided with an inherent attribute, the inherent attribute represents a common feature of different types of objects, and the different types of objects comprises the target object or the sub-object; and
establishing an association relationship between the second data model of the at least one sub-object and the first data model of the target object.

2. The method according to claim 1, wherein the target object is a target physical entity and the sub-object is a part entity; or
the target object is a target event and the sub-object is a sub-event.

3. The method according to claim 1 or 2, wherein the data model is further provided with a model identification, and the model identification is used to uniquely identify the data model.

4. The method according to claim 1 or 2, wherein the association relationship comprises that the second data model of the sub-object is a child model of the first data model of the target object; and the first data model of the target object is a unique parent model of the second data model of the sub-object.

5. The method according to claim 1 or 2, wherein the data model further comprises model version information; and the establishing an association relationship between the second data model of the at least one sub-object and the first data model of the target object further comprises:
establishing an association relationship between at least one version of the first data model of the target object and at least one version of the second data model of the sub-object.

6. The method according to claim 1 or 2, wherein the data model further comprises model version information; and the association relationship comprises that one of versions of the second data model of the sub-object is a child model of one of versions of the first data model of the target object, and one of the versions of the data model of the target object is a unique parent model of one of the versions of the second data model of the sub-object.

7. The method according to claim 1 or 2, wherein the data model comprises a structural data model and a predefined data model, and one structural data model corresponds to at least one predefined data model;
wherein the structural data model at least comprises a description, comprising an attribute name and a data type, of an attribute; and the predefined data model is used to record a set of specific values of an attribute of the structural data model corresponding to the predefined data model.

8. The method according to claim 7, wherein the data model further comprises model version information; and the establishing an association relationship between the second data model of the at least one sub-object and the first data model of the target object further comprises:
establishing an association relationship between at least one version of a structural data model of the target object, and at least one version of a predefined data model of the sub-object;
wherein the predefined data model is a child model of the structural data model, and the structural data model is a unique parent model of the predefined data model.

9. The method according to claim 7, wherein the data model further comprises model version information; and the establishing an association relationship between the second data model of the at least one sub-object and the first data model of the target object further comprises:
establishing an association relationship between at least one version of a predefined data model of the target object and at least one version of a predefined data model of the sub-object;
wherein the predefined data model of the sub-object is a child model of the predefined data model of the target object; and the predefined data model of the target object is a unique parent model of the predefined data model of the sub-object.

10. The method according to claim 1 or 2, wherein when the target object is a target physical entity, the inherent attribute comprises a part or all of the following: a temporal attribute, and a spatial attribute;
wherein the temporal attribute is used to characterize a frequency of change in state of an entity, the spatial attribute is used to characterize a space in which the entity is located, the spatial attribute at least comprises a location and a shape, and the entity is the target physical entity or a part entity.

11. The method according to claim 1 or 2, wherein when the target object is a target event, the inherent attribute comprises a part or all of the following: a temporal attribute, and a spatial attribute;
wherein the spatial attribute is used to characterize a space in which an event occurs, the temporal attribute at least comprises a start time and further comprises at least one of a time duration or an end time, and the event is the target event or a sub-event.

12. The method according to claim 1 or 2, wherein the data model further comprises a unique attribute; the unique attribute represents a unique feature of an object, and the object is the target object or the sub-object;
wherein the unique attribute comprises: a member collection comprising at least one custom member, and each custom member is used to map to one unique feature of the object.

13. A model data query method, comprising:
building a first data model of a target object and a second data model of at least one sub-object respectively for the target object and the at least one sub-object contained in the target object, wherein a data model is at least provided with an inherent attribute, the inherent attribute represents a common feature of different types of objects, and the different types of objects comprises the target object or the sub-object;
establishing an association relationship between the second data model of the at least one sub-object and the first data model of the target object;
receiving a subscription request for the first data model, wherein the subscription request comprises subscription item information;
identifying a model change feature of a change in model data of the first data model and/or the second data model, wherein the model change feature comprises a model attribute and a model change event; and
determining a subscription client based on the model change feature and at least one subscription request, publishing the model change event to the subscription client.

14. The method according to claim 13, wherein the target object is a target physical entity and the sub-object is a part entity; or
the target object is a target event and the sub-object is a sub-event.

15. The method according to claim 14, wherein the model attribute comprises a model identification, a name, a version, a temporal attribute, a spatial attribute, and a description.

16. The method according to claim 14, wherein the model change event comprises: a creation event, a deletion event, a version upgrade event, a structure change event, and an attribute change event.

17. The method according to claim 15 or 16, wherein the subscription request comprises an arbitrary combination in the model change event; or, the subscription request comprises an arbitrary combination in the model attribute.

18. The method according to any one of claims 13 to 16, further comprising:
obtaining a first model identification and an association relationship of a to-be-queried model, wherein the to-be-queried model is at least one of the first data model of the target object or the second data model of the sub-object; and
querying model data of the to-be-queried model and model data of a model associated with the to-be-queried model based on the first model identification and the association relationship.

19. The method according to claim 18, wherein the data model further comprises model version information; wherein
the obtaining a first model identification and an association relationship of a to-be-queried model further comprises:
obtaining model version information of the to-be-queried model; and
the querying model data of the to-be-queried model based on the first model identification and the association relationship comprises:
building a query index based on the model version information and the first model identification, and querying model data of the to-be-queried model based on the query index.

20. The method according to claim 18, wherein the querying model data of a model associated with the to-be-queried model based on the first model identification and the association relationship comprises:
obtaining a collection of sub-identifications corresponding to the to-be-queried model based on the association relationship, wherein the collection of sub-identifications comprises a second model identification of at least one child model, a parent model of which is the to-be-queried model; and
querying model data of child models respectively based on respective second model identifications in the collection of sub-identifications as the model data of the model associated with the to-be-queried model.

21. A model building apparatus, comprising:
a model building unit, configured for building a first data model of a target object and a second data model of at least one sub-object respectively for the target object and the at least one sub-object contained in the target object, wherein a data model is at least provided with an inherent attribute, the inherent attribute represents a common feature of different types of objects, and the different types of objects comprises the target object or the sub-object; and
a model association unit, configured for establishing an association relationship between the second data model of the at least one sub-object and the first data model of the target object.

22. A model data subscription apparatus, comprising:
a model building unit, configured for building a first data model of a target object and a second data model of at least one sub-object respectively for the target object and the at least one sub-object contained in the target object, wherein a data model is at least provided with an inherent attribute, the inherent attribute represents a common feature of different types of objects, and the different types of objects comprises the target object or the sub-object;
a model association unit, configured for establishing an association relationship between the second data model of the at least one sub-object and the first data model of the target object; and
a data subscription unit, configured for receiving a subscription request for the first data model, wherein the subscription request comprises subscription item information; identifying a model change feature of a change in model data of the first data model and/or the second data model, wherein the model change feature comprises a model attribute and a model change event; and determining a subscription client based on the model change feature and at least one subscription request, publishing the model change event to the subscription client.

23. An electronic device, comprising: a processor and a memory, wherein the memory stores a computer program, and the computer program is executed by the processor to cause the processor to perform the method according to any one of claims 1 to 20.

24. A computer-readable storage medium, comprising: a computer program, wherein when the computer program is run on an electronic device, the computer program is configured to cause the electronic device to perform the method according to any one of claims 1 to 20.
